(19) Europäisches Patentamt

European Patent Office

Office européen des brevets

(11) **EP 4 716 178 A1**

(12) **EUROPEAN PATENT APPLICATION**

(43) Date of publication:
**25.03.2026 Bulletin 2026/13**

(21) Application number: **25199889.4**

(22) Date of filing: **03.09.2025**

(51) International Patent Classification (IPC):
*H04L 47/12* (2022.01)    *H04L 47/10* (2022.01)
*H04L 47/265* (2022.01)    *H04L 47/31* (2022.01)
*H04L 47/32* (2022.01)    *H04L 47/33* (2022.01)

(52) Cooperative Patent Classification (CPC):
**H04L 47/12; H04L 47/23; H04L 47/265;
H04L 47/31; H04L 47/32; H04L 47/33**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.09.2024 US 202418891481**

(71) Applicant: **VMware LLC
Palo Alto, CA 94304 (US)**

(72) Inventor: **Chen, Xiaoqi
Sunnyvale, CA, 94086 (US)**

(74) Representative: **Grünecker Patent- und
Rechtsanwälte
PartG mbB
Leopoldstraße 4
80802 München (DE)**

(54) **CONGESTION CONTROL IN A DISTRIBUTED TRAINING ENVIRONMENT**

(57)     Example methods and systems for congestion control in a distributed training environment are described. In one example, a computer system may obtain model information associated with a model that is being trained by multiple worker nodes. Based on the model information, the computer system may generate a first payload portion that is non-trimmable, and a second payload portion that is trimmable. The computer system may generate a trimmable payload information that includes the first payload portion and the second payload portion. The trimmable payload information may be forwarded towards a destination. In response to determination that congestion control is required, an intermediate network device may generate and forward trimmed payload information towards the destination. The trimmed payload information may include the first payload portion but excludes at least some of the second payload portion.

FIG. 1

## Description

### BACKGROUND

In a distributed training environment, multiple worker nodes may work together to train a model, such as an artificial intelligence (AI) model, etc. This distributed approach may be implemented to leverage the combined computational power and memory of multiple worker nodes, enabling the handling of large datasets and complex models more than a single worker node is able to. However, congestion may occur due to high volume of data exchanged among worker nodes. This may lead to bottlenecks, especially if there is insufficient network bandwidth. Additionally, synchronization overhead, where worker nodes need to frequently communicate to update the model, may further exacerbate congestion, slowing down the overall training process. It is therefore desirable to perform congestion control in the distributed training environment.

### SUMMARY

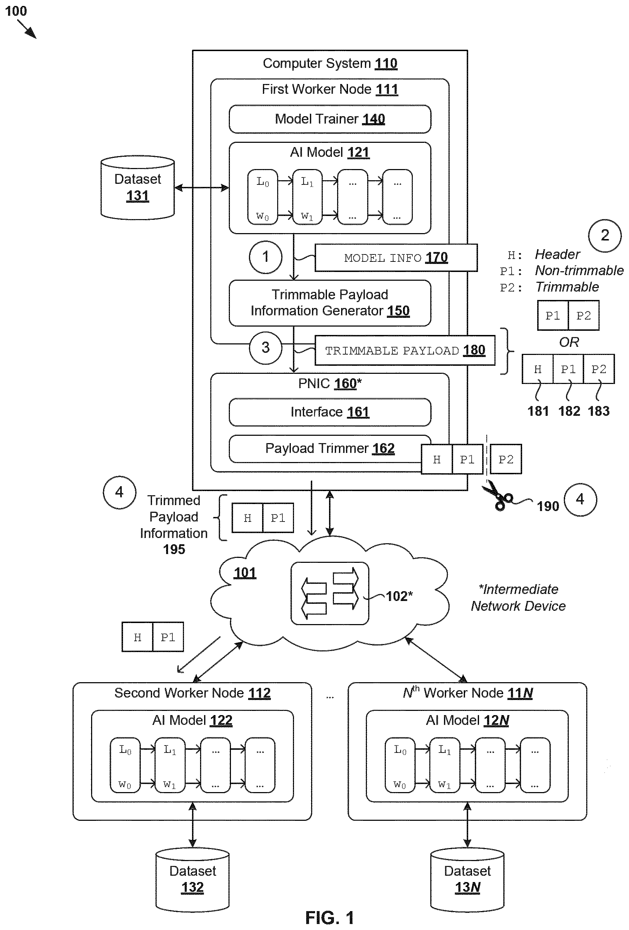

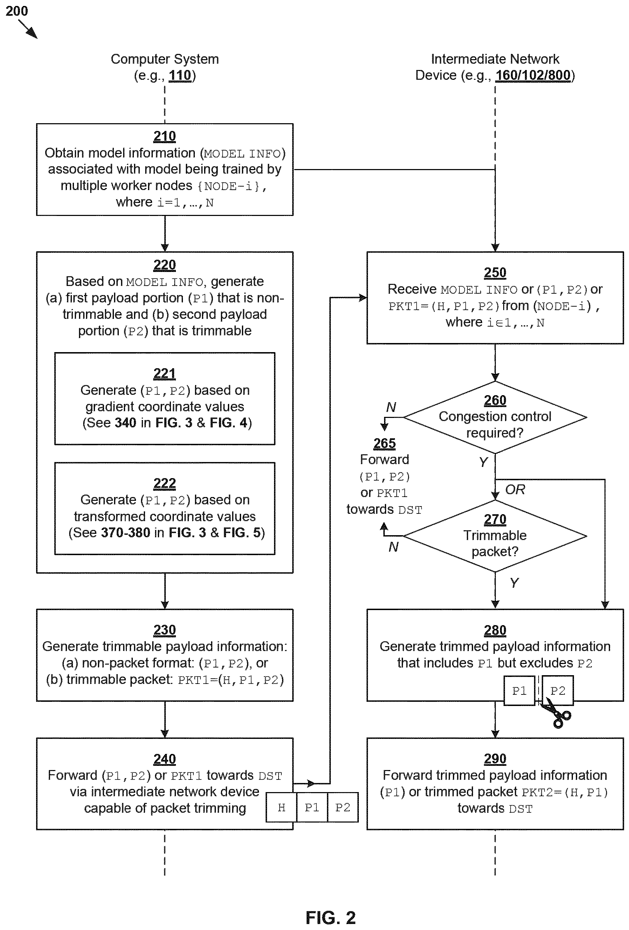

According to a first aspect of the present disclosure, computer system(s) and method(s) for distributed training and congestion control using trimmable payload information are described. In one example, a computer system (e.g., 110 in FIG. 1) may obtain model information associated with a model that is being trained by multiple worker nodes (e.g., 111-11$N$ in FIG. 1) in a distributed training environment. A first worker node from the multiple worker nodes may be supported by the computer system. Based on the model information, the computer system may generate a first payload portion that is non-trimmable, and a second payload portion that is trimmable. See 170 in FIG. 1 and 210-220 in FIG. 2.

The computer system may generate trimmable payload information that includes the first payload portion and the second payload portion. The trimmable payload information may be forwarded towards a destination via an intermediate network device (e.g., 160/102 in FIG. 1). The trimmed payload information may be forwarded to cause the intermediate network device to, in response to determination that congestion control is required, generate and forward trimmed payload information towards the destination. The trimmed payload information may include the first payload portion but excludes at least some of the second payload portion. Depending on the desired implementation, the trimmable payload information may be in a packet format (i.e., trimmable packet) or non-packet format (i.e., no header information). See 180-195 in FIG. 1 and 230-240 in FIG. 2.

According to a second aspect of the present disclosure, network device(s) and method(s) for congestion control using trimmable payload information are described. In one example, a network device (e.g., 160/102/800 in FIGs. 1, 7A-B and 8A-B) may comprise an interface to receive, from one of multiple worker nodes in a distributed training environment, (a) model information associated with the model or (b) trimmable payload information. The trimmable payload information may be generated based on the model information associated with a model. The trimmable payload information may include a first payload portion and a second payload portion. See 180 in FIG. 1 and 250 in FIG. 2.

The network device may further comprise a trimmer to, in response to determination that congestion control is required, generate trimmed payload information that includes the first payload portion that is non-trimmable. The trimmed payload information may exclude at least some of the second payload portion that is trimmable. This way, the trimmed payload information may be forwarded towards a destination. See 190-195 in FIG. 1 and 260-290 in FIG. 2.

Examples of the present disclosure may further include a non-transitory computer-readable storage medium that includes a set of instructions which, in response to execution by a processor, cause the processor to perform aspect(s) of the above method(s). The processor may be associated with computer system(s) capable of generating trimmable payload information according to the first aspect, or network device(s) capable of performing congestion control by generating trimmed payload information (e.g., in non-packet and/or packet format) according to the second aspect above.

### BRIEF DESCRIPTION OF DRAWINGS

FIG. 1 is a schematic diagram illustrating an example distributed training environment in which congestion control using trimmable payload information may be performed.

FIG. 2 is a flowchart of an example process for congestion control using trimmable payload information in a distributed training environment.

FIG. 3 is a flowchart of an example detailed process for congestion control using trimmable payload information in a distributed training environment.

FIG. 4 is a schematic diagram illustrating a first example of congestion control using trimmable payload information in a distributed training environment.

FIG. 5 is a schematic diagram illustrating a second example of congestion control using trimmable payload information in a distributed training environment.

FIG. 6 is a schematic diagram illustrating a comparison between a conventional packet and trimmable payload information according to the examples in FIGs. 4-5.

FIG. 7A is a schematic diagram illustrating a third example of congestion control using trimmable payload information in a distributed training environment.

FIG. 7B is a schematic diagram illustrating a fourth example of congestion control using trimmable payload information in a distributed training environment.

FIG. 8A is a schematic diagram illustrating a first example interconnect network switch for congestion control using trimmable payload information in a distributed training environment.

FIG. 8B is a schematic diagram illustrating a second example interconnect network switch for congestion control using trimmable payload information in a distributed training environment.

FIG. 9 is a schematic diagram illustrating example multi-level packet trimming for congestion control in a distributed training environment.

FIG. 10 is a schematic diagram illustrating an example software-defined networking (SDN) environment in which worker nodes may be implemented.

## DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the drawings, may be arranged, substituted, combined, and designed in a wide variety of different configurations, all of which are explicitly contemplated herein.

Although the terms "first" and "second" are used to describe various elements, these elements should not be limited by these terms. These terms are used to distinguish one element from another. For example, a first element may be referred to as a second element, and vice versa. As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

## Distributed training environment

FIG. 1 is a schematic diagram illustrating example distributed training environment 100 in which congestion control using trimmable payload information may be performed. It should be understood that, depending on the desired implementation, distributed training environment 100 may include additional and/or alternative components than that shown in FIG. 1. As used herein, the term "distributed training environment" may refer generally to a network environment in which workload associated with training a model may be distributed among multiple worker nodes. In practice, distributed training may be performed to improve speed (i.e., training times), scalability (e.g., easier handling of large datasets and complex models) and efficiency (e.g., better utilization of computational resources) during training.

In the example in FIG. 1, a cluster of multiple ($N$) worker nodes 111-11$N$ may be deployed in distributed training environment 100 to perform distributed training. For example, first worker node 111 supported by computer system 110 may be configured to train model 121 based on dataset 131. Second worker node 112 may be configured to train model 122 based on dataset 132. Similarly, $N^{th}$ worker node 11$N$ may be configured to train model 12$N$ based on dataset 13$N$. As used herein, the term "worker node" may refer generally to a computing resource that is capable of performing task(s) relating to model training. The phrase "supported by a computer system" may refer generally to the computer system providing hardware and/or software component(s) to implement/facilitate various operations of a worker node, etc. In practice, worker nodes *111-11N* may be equipped with one or more accelerators to accelerate the computation of training tasks, such as graphics processing units (GPUs), tensor processing units (TPUs), etc. A "worker node" may be referred to as a "compute node," "training node," "processing node," "compute resource," "GPU node" (if equipped with GPU), etc. In another example, training may be performed by any suitable software and/or hardware component(s) of computer system 110.

In practice, distributed training environment 100 may implement any suitable parallelism strategy to scale training across multiple worker nodes, such as data parallelism, model parallelism, or a combination of both (i.e., hybrid parallelism), etc. For example, using data parallelism, worker nodes 111-11$N$ may each train a copy or replica of the same model (see 121-12$N$) using different datasets 131-13$N$. This way, a large dataset may be divided into smaller chunks 131-13N such that each chunk may be processed independently by a different worker node. In another example, using model parallelism, a model may be split into multiple parts (also represented using 121-12N), each of which is trained using a different worker node. This is especially useful when the model is too large to fit into the memory of a single node. Using hybrid parallelism, a combination of data and model parallelism may be implemented to leverage the advantages of both.

As used herein, the term "model" may refer generally to a mathematical representation or algorithm that may be trained in distributed training environment 100 to make predictions or decisions based on input data. In the example in FIG. 1, an artificial intelligence (AI) model (see 121-12N) may be trained in a distributed manner, such as a machine learning (ML) model, deep learning model, etc. In general, deep learning is a subset of machine learning in which multilayered neural networks may be used for feature extraction as well as pattern analysis and/or classification. The term "deep" in deep learning generally refers to the number of layers in the neural network. For example, compared to shallow learning models, deep learning models may have dozens or even hundreds of layers. This allows deep learning models to extract more complex and nuanced features from input data, leading to more accurate output data. Although described using AI model(s), it should be understood that examples of the present disclosure may be implemented during the training of non-AI model(s), such as linear regression model, decision tree, random forest, etc.

Depending on the desired implementation, any suitable AI model(s) may be trained according to examples of the present disclosure, such as convolutional neural network (CNN), recurrent neural network (RNN), deep belief network, generative adversarial network (GAN), autoencoder(s), variational autoencoder(s), long short-term memory architecture for tracking purposes, transformer network, or any combination thereof, etc. In practice, a neural network is generally formed using a network of processing elements (called "neurons," "nodes," etc.) that are interconnected via connections (called "synapses," "weight data," etc.). A processing layer of a convolutional neural network may be a convolutional layer, pooling layer, un-pooling layer, rectified linear units (ReLU) layer, fully connected layer, loss layer, activation layer, dropout layer, transpose convolutional layer, concatenation layer, attention layer, or any combination thereof, etc. For example, CNNs may be implemented using any suitable architecture(s), such as UNet, LeNet, AlexNet, ResNet, VNet, DenseNet, OctNet, etc.

During training, worker node 111/112/11N may process dataset 131/132/13N to generate model information associated with model 121/122/12N. Here, the term "model information" may refer generally to any suitable information generated by a worker node in the process of training a model. For example, the model information may include gradient coordinate values (also referred to as "gradients" and "gradient vector") associated with model 121/122/12N. In another example, the model information may include parameters (e.g., weight information) associated with model 121/122/12N. In practice, gradients may represent the direction and rate of change in a model's parameters (e.g., weights) with respect to the loss function. As such, gradients may indicate how much the model's predictions deviate from actual values, guiding the learning process to minimize the error. Using data parallelism, each worker node 111/112/11N may compute model information based on its dataset 131/132/13N (e.g., one or more chunks of a larger dataset).

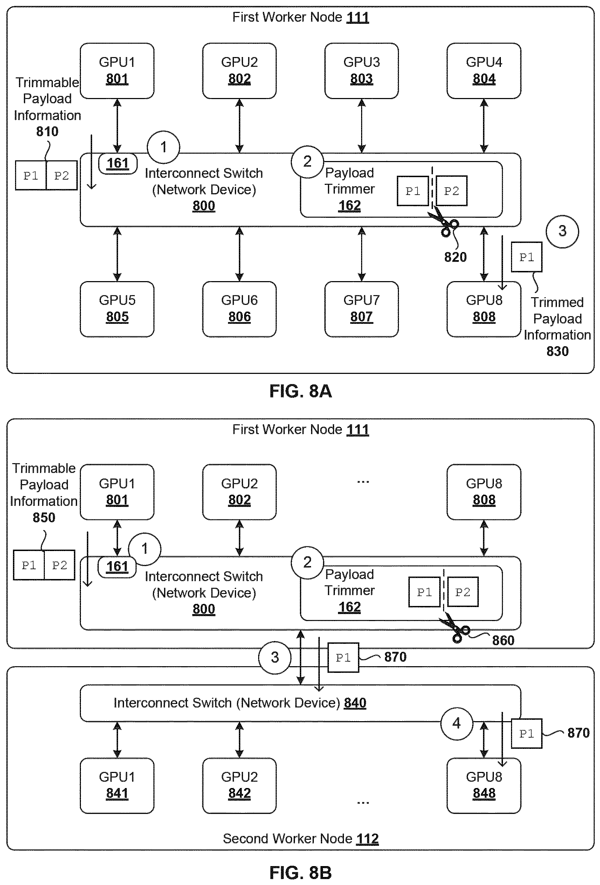

To synchronize training results, model information generated by one worker node may be aggregated with model information generated by other worker nodes. In the example in FIG. 1, worker nodes 111-11N may communicate via physical network 101. At computer system 110, for example, first worker node 111 may generate and send packets to second worker node 112 via any suitable intermediate network device(s). Here, the term "network device" (or "network hop") may refer generally to any suitable hardware and/or software component(s) capable of connecting a worker node with a destination or different components (e.g., GPUs) of the same worker node, such as physical network interface controller (PNIC) 160, interconnect network switch 800 (to be described using FIGs. 8A-B), network switch 102 in physical network 101, network router, gateway, etc.

Any suitable synchronization approach may be used, such as a centralized approach, decentralized approach. For example, using a centralized approach, a parameter server (not shown in FIG. 1) may be deployed to maintain global model parameters. With each iteration, worker nodes may generate and send their local gradients to the parameter server, which may then aggregate the gradients, update the global model parameters and send updated parameters to worker nodes 111-11N. The centralized approach may lack scalability and efficiency, such as when parameter server becomes a bottleneck.

In another example, using a decentralized approach, worker nodes 111-11N may perform synchronization by communicating directly with each other using any suitable topology, thereby eliminating the need for a central parameter server. One example implementation is known as the all-reduce algorithm, which dictates how parameters are calculated and shared. For example, ring all-reduce algorithms use a ring topology to facilitate communication among worker nodes 111-11N. In this case, first worker node 111 may send its model information to second worker node 112, who is the next node in the ring topology. In another example, tree all-reduce algorithms use a tree topology for synchronization. In this case, first worker node 111 may send its model information to second worker node 112, who is the next node in the tree topology. Using the decentralized approach, synchronization overhead may be reduced. In the following, various examples will be discussed using data parallelism and the decentralized approach. Any additional and/or alternative approach(es) may be used.

Congestion

In practice, distributed training of AI models requires a significant amount of data transfer over a network. For example, when running distributed stochastic gradient descent with data parallelism, worker nodes 111-11*N* (e.g., GPU nodes) need to quickly exchange their local model information (e.g., gradients) with each other after processing respective datasets 131-13*N*. The aim is to compute aggregated model information, such as a global average that is used to update the model's weights. For example, the rapidly growing scale of today's Large Language Model training (e.g., 25,000 GPUs or more) has exceeded a traditional limit of densely connected clusters with dedicated network fabric (e.g., 4,000-10,000 GPUs). In this case, a training job might span across multiple such clusters, connected by an over-subscribed second-layer network fabric. Network paths connecting worker nodes 111-11*N* may become longer and more unpredictable due to cross-traffic, where the paths may be shared by training jobs and other applications. In practice, collisions among different traffic flows may lead to congestion, high queuing delays, or even packet loss. This is especially the case when an ML trainer bids for the cheapest GPUs in a cloud environment (e.g., public cloud, private cloud, etc.), using spot instances, etc. In this case, the underutilized (and therefore cheap) GPU nodes could be anywhere, scattered across different racks in a data center, far away from each other, or even across multiple data centers in a region.

Meanwhile, conventional congestion control approaches may not be effective in distributed training environment 100. For example, transport protocols for ML training (e.g., collective communication library (*ccl)) may provide strict reliability semantics to a training process running on an upper layer in a networking stack. Such transport protocols may also require lossless delivery in the underlying network, either via a lossless fabric (e.g., using priority flow control or pause frames) or use retransmission to ensure data integrity. However, retransmission is costly: reacting to packet loss by retransmitting the same gradients at the same precision (i.e., same amount of data) exacerbates congestion. Further, waiting for retransmissions may create slow-finishing stragglers among worker nodes *111-11N.* All other worker nodes may have to wait for the slowest worker node to complete sending its model information, unless and until a straggler migration strategy kicks in. Therefore, the tail latency (i.e., slowest flow completion time) is especially important for achieving distributed AI model training.

Congestion control using trimmable packets

According to examples of the present disclosure, congestion control in distributed training environment 100 may be implemented in an improved manner using trimmable payload information. In particular, payload information that is generated based on model information may be configured to be trimmable. In response to determination that congestion control is required, trimmable payload information may be trimmed to reduce the amount of network traffic being sent via physical network 101. As such, unlike conventional approaches that necessitate packet dropping and/or retransmission of the same model information, trimmed payload information may be forwarded towards a destination.

Some examples will be described using FIG. 2, which is a flowchart of example process 200 for congestion control using trimmable packets. Example process 200 may include one or more operations, functions, or actions illustrated by one or more blocks, such as 210 to 290. Depending on the desired implementation, various blocks may be combined into fewer blocks, divided into additional blocks, and/or eliminated.

(a) Computer system

According to a first aspect of the present disclosure, computer system(s) and method(s) for distributed training using trimmable packets are described. Blocks 210-240 may be performed using any suitable "computer system," such as computer system 110 supporting first worker node 111, a different computer system supporting a different worker node, etc. Computer system 110 may include any suitable hardware and/or software component(s), such as model trainer 140, trimmable payload information generator 150, etc.

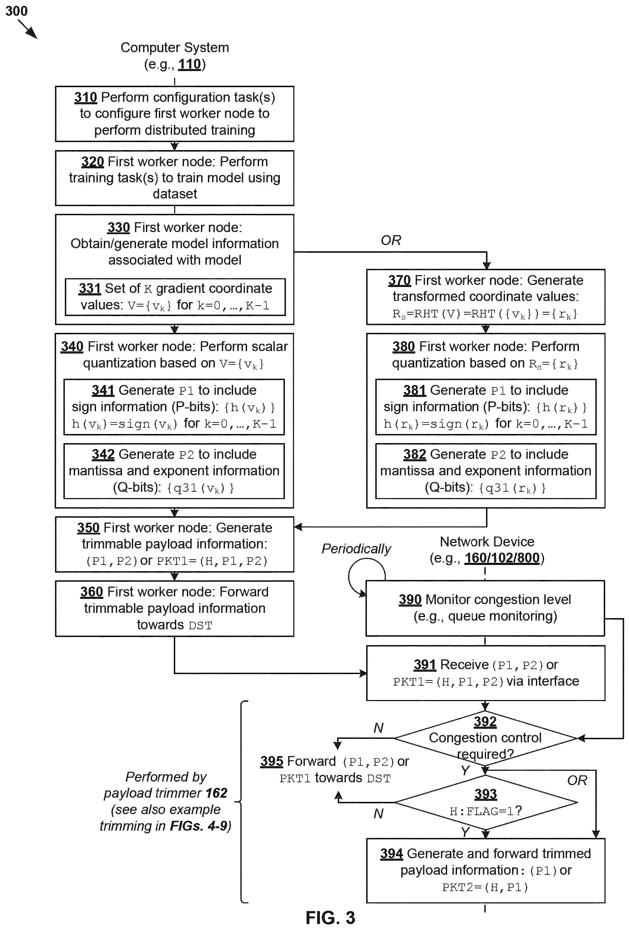

At 210 in FIG. 1, computer system 110 may obtain/generate model information 170 associated with model 121 that is being trained by multiple worker nodes *111-11N* in distributed training environment 100. If using data parallelism, model 121 may represent a copy or replica of a model that is being trained by worker nodes *111-11N.* As will be discussed using FIGs. 3-5, model information 170 may include a set of gradient coordinate values associated with model 121.

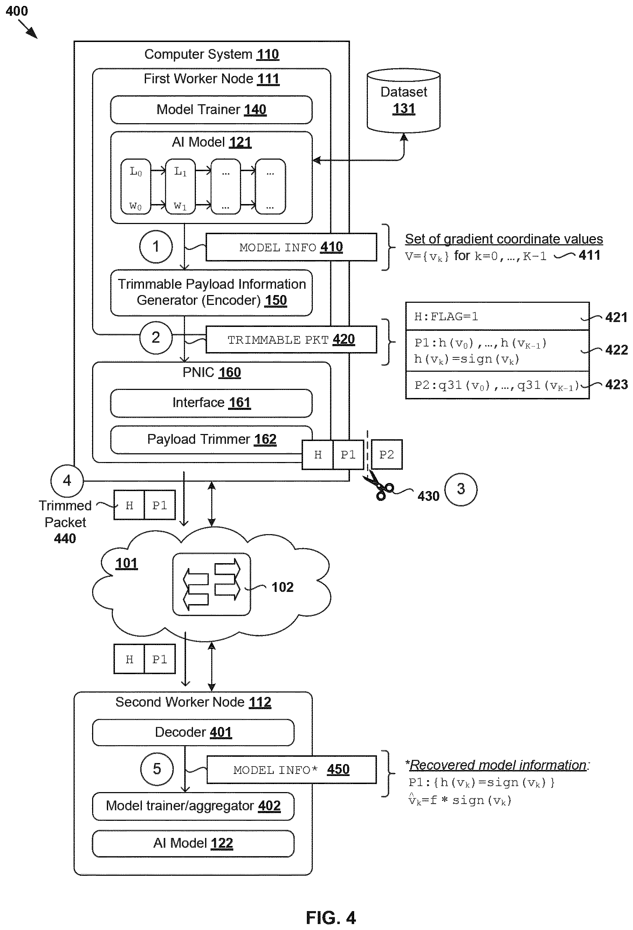

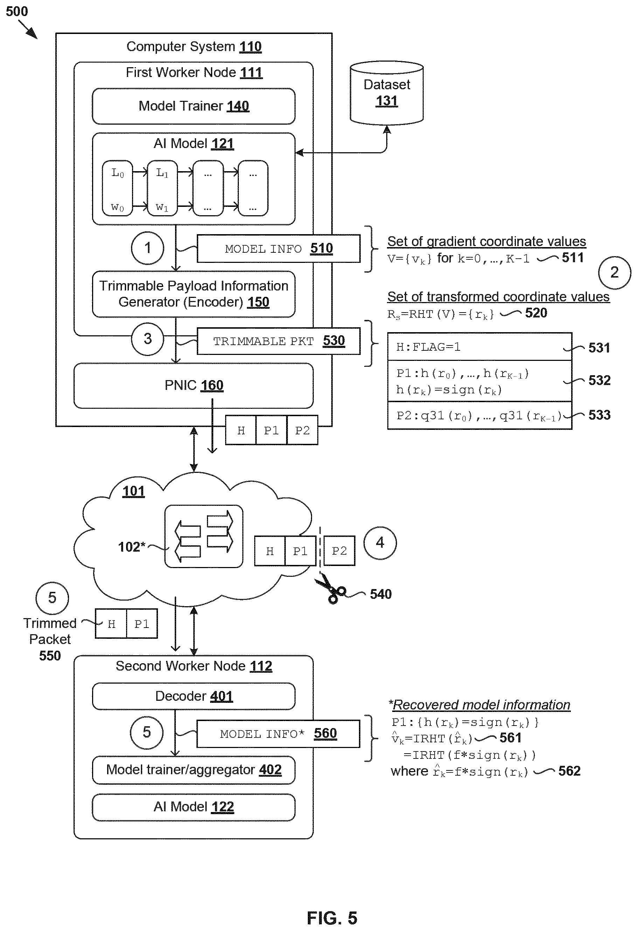

At 220 in FIG. 2, based on model information 170, computer system 110 may generate a first payload portion that is non-trimmable, and a second payload portion that is trimmable. Depending on the desired implementation, block 220 may involve performing compression, such as quantization, etc. In one example (see 221), scalar quantization may be applied to a set of gradient coordinate values (to be described using FIG. 4). In another example (see 222), a set of transformed coordinate values may be generated before quantization is applied (to be described using FIG. 5).

At 230 in FIG. 2, computer system 110 may generate trimmable payload information (see 180 in FIG. 1) that includes the first payload portion (P1) and the second payload portion (P2). See 182-183 in FIG. 1. At 240, computer system 110 may forward trimmable payload information 180 towards a destination via intermediate network device 160/102. As used herein, the term "trimmable payload information" may refer generally to any suitable information that is generated based on model information and includes at least one portion that is trimmable/discardable. It should be understood that the "trimmable payload information" may be in any suitable format. In one example, trimmable payload information 180 may be in a non-packet format (i.e., no header information). In another example, trimmable payload information 180 may be in a packet format, i.e., a trimmable packet that includes header information (H), P1 and P2; see also 181. The term "non-trimmable" may refer generally to information that is designed to be retained (i.e., not discarded) as a measure of congestion control. The term "trimmable" may refer to information that is designed to be discardable as a measure of congestion control. Depending on the desired implementation, any suitable model information may be included in a non-trimmable portion. For example, a lower quality of model information 170 may be recoverable based solely on first payload portion 182, compared to using both first and second payload portions 182-183.

For example, using a decentralized approach for synchronization, the "destination" may be another worker node, such as second worker node 112. Alternatively (not shown), using a centralized approach, the "destination" may be a central parameter server. Trimmable packet 180 (i.e., trimmable payload information in a packet format) may be forwarded to cause intermediate network device 160/102 to, in response to determination that congestion control is required, (a) identify trimmable packet 180 based on header information 181 and (b) generate and forward trimmed packet 195 towards the destination.

(b) Network device

According to a second aspect of the present disclosure, network device(s) and method(s) for congestion control using trimmable packets in distributed training environment 100 are described. Blocks 250-290 in FIG. 2 may be performed using any suitable intermediate "network device," such as PNIC 160 of computer system 110, network switch 102 in physical network 101, etc. Network device 160/102 may include any suitable hardware and/or software component(s), including interface(s) 161 to receive/send packets, payload trimmer 162 to perform payload information trimming, etc. As used herein, the term "interface" may refer generally to any suitable element via which trimmable payload information may be received, such as physical interface (e.g., port, connector), logical interface (e.g., logical port), software interface (e.g., implemented using software/firmware), etc.

The term "payload trimmer" or "trimmer" may refer generally to hardware and/or software component(s) of a network device that is/are configured to generate trimmed payload information by removing/discarding at least some of a trimmable portion in trimmable payload information. In one example, trimmer 162 may be implemented using hardware component(s), such as processor, programmable hardware, etc. Additionally or alternatively, trimmer 162 may be implemented using software, such as computer-readable instructions that, when executed by hardware component(s), cause the hardware component(s) to perform trimming algorithm(s) according to examples of the present disclosure. Example algorithm(s) performed by trimmer 162 will be explained using blocks 260-290 in FIG. 2, blocks 392-395 in FIG. 3, and FIGs. 3-9.

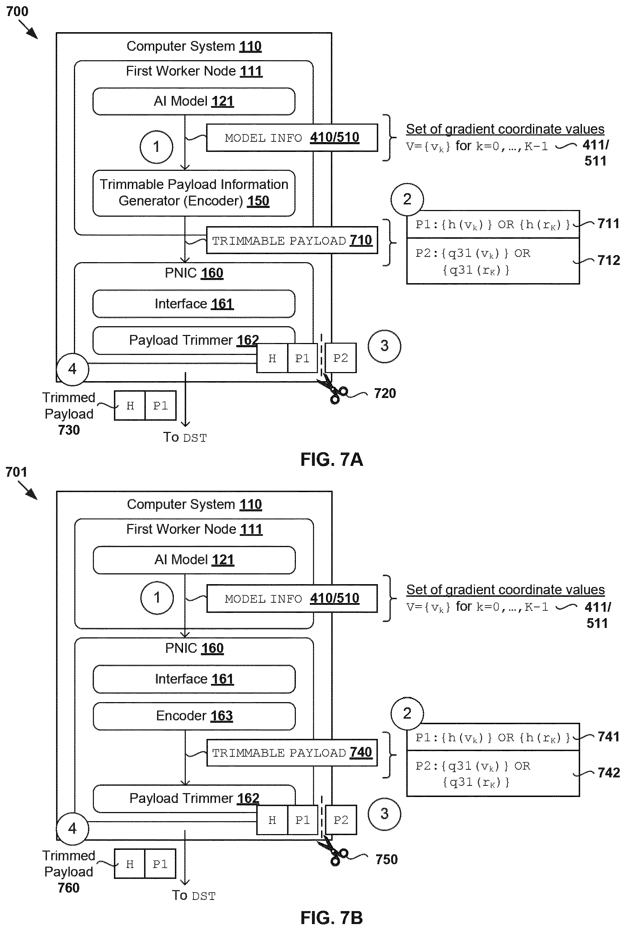

At 250 in FIG. 2, an example network device in the form of PNIC 160 may include interface 161 to receive trimmable payload information 180 from first worker node 111, i.e., one of multiple worker nodes *111-11N* capable of training a model in distributed training environment 100. Trimmable payload information 180 may be generated based on model information 170 associated with model 121, and include first payload portion 182 and second payload portion 183. In another example that will be described using FIG. 7B, PNIC 160 may be configured to receive model information 170 associated with model 121, generate trimmable payload information 180 based on model information 170, and perform trimming in response to determination that congestion control is required.

At 260 and 280 in FIG. 2, in response to determination that congestion control is required, trimmer 162 on network device 160 may generate trimmed payload information 195 that includes (a) the first payload portion 182 that is non-trimmable but excludes (b) at least some of the second payload portion 183 that is trimmable. As used herein, the term "trimmed payload information" may refer generally to any suitable information that is generated by trimming or discarding at least some of trimmable payload information. In the example in FIG. 1 (also shown in FIGs. 4-7B), trimmed payload information 195 may be in a packet format, i.e., a trimmable packet that includes header information (H) and P1. In this case, block 270 may be performed to determine whether a received packet is trimmable. In another example (to be described using FIGs. 8A-B), trimmed payload information 195 may be in a non-packet format (i.e., no header information).

At 290 in FIG. 2, trimmed payload information 195 may be forwarded towards a destination (e.g., second worker node 112) such that a lower quality of model information 170 is recoverable based on the trimmed payload information at the destination. The term "lower quality" may refer generally to an inferior level compared to a higher benchmark, such as lower quality in terms of precision, accuracy or content compared to the original model information.

First example: scalar quantization

FIG. 3 is a flowchart of example detailed process 300 for congestion control using trimmable payload information in distributed training environment 100. Example process 300 may include one or more operations, functions, or actions illustrated by one or more blocks, such as 310 to 395. Depending on the desired implementation, various blocks may be combined into fewer blocks, divided into additional blocks, and/or eliminated. Blocks 310-360 and 390-395 in FIG. 3 will be described using FIG. 4, which is a schematic diagram illustrating first example 400 of congestion control using trimmable payload information in distributed training environment 100. In the example in FIG. 4, trimmable payload information will be exemplified using trimmable packets.

(a) Configuration

At 310 in FIG. 3, computer system 110 may perform configuration task(s) to configure first worker node 111 to perform distributed training as part of a cluster of worker nodes *111-11N.* Any suitable configuration tasks may be performed, such as installing relevant libraries, ensuring first worker node 111 is able to communicate with other worker nodes 112-11*N* via PNIC 160 and physical network 101, etc. Using data parallelism as an example, block 310 may include obtaining replica 121 of an AI model to be trained by worker nodes 111-11*N,* obtaining dataset 131 (i.e., a subset or chunk of a larger dataset) for training AI model 121, etc. Similar configuration tasks may be performed for other worker nodes 112-11*N.*

(b) Model training

At 320 in FIG. 3, first worker node 111 (e.g., model trainer 140) may perform training task(s) to train AI model 121 using first dataset 131. Any suitable training task(s) may be performed, such as forward pass, loss calculation, backward pass, etc. For example, a forward pass may involve passing input data through AI model 121 (e.g., neural network) to obtain output data (e.g., predictions). Loss calculation may involve calculating loss based on the output data and true labels using any suitable loss function. A backward pass may involve generating model information that includes a set of gradient coordinate values, etc.

In practice, AI model 121 may be trained using any suitable approach, such as supervised learning, unsupervised learning, semi-supervised learning, reinforcement learning, etc. For example, in supervised learning, AI model 121 may be trained on a dataset of labeled examples in order to learn the relationship between input data and output data (e.g., label or prediction). Alternatively, in unsupervised learning, AI model 121 may be trained on a dataset of unlabeled examples in order to learn patterns and relationships in the data without any prior knowledge of the output labels. In semi-supervised learning, both labeled and unlabeled data may be used.

At 330 in FIG. 3, first worker node 111 may obtain model information associated with AI model 121. For example, trimmable packet generator or encoder 150 may receive/retrieve model information from model trainer 140 or data store/memory, etc. At 331, the model information may include a set of multiple ($K$) gradient coordinate values denoted as $V = \{v_k\}$ for $k = 0, ..., K - 1$. Each gradient coordinate value ($v_k$) may be represented in a floating-point format (e.g., 32 bits), etc. See also 410-411 in FIG. 4.

(c) Gradient compression (scalar quantization)

At 340 in FIG. 3, based on model information 410, first worker node 111 may perform compression, such as scalar quantization, to generate multiple ($M$) portions of payload information. In practice, a trimmable quantization problem requires efficient encoding of each gradient coordinate value ($v_k$) into multiple ($M$) portions of predetermined length, such that a decoder at a destination may decode using one or more of the portions forming a prefix of the encoding. In the example in FIG. 4, $M = 2$ payload portions may be generated, i.e., a trimmable portion (P1) and a non-trimmable portion (P2). As will be described using FIG. 7, multiple non-trimmable portions may be generated (i.e., $M > 2$).

For example, block 340 may involve performing two-part encoding to generate $P + Q$ bits. Here, $P$ represents a first bit length for the trimmable portion (P1) and $Q$ represents a second bit length for a non-trimmable portion (P2). The first $P$-bits (i.e., first payload portion or "head") may be configured to be non-trimmable while the remaining $Q$-bits (i.e., second payload portion or "tail") are trimmable. The $P$-bits may represent an efficient standalone compression when the $Q$-bits are trimmed. The $Q$-bits may be configured to not carry redundant information that is already include in the $P$-bits.

In more detail, at 341 in FIG. 3 and 422 in FIG. 4, first worker node 111 may generate a first payload portion (P1) to include sign information associated with $V = \{v_k\}$ in a floating-point format (e.g., 32 bits). For each gradient coordinate value $v_k$, a $P$-bit quantization value denoted as $h(v_k)$ may be configured to be non-trimmable. Using $P = 1$ as an example, the quantized sign bit of $v_k$ may be denoted as $h(v_k) = sign(v_k)$, assuming $V = \{v_k\}$ are symmetrically distributed around zero. This assumption may be removed in FIG. 5.

At 342 in FIG. 3 and 423 in FIG. 4, first worker node 111 may generate a second payload portion (P2) to include mantissa information and exponent information associated with $V = \{v_k\}$ in a floating-point format (e.g., 32 bits). For each gradient coordinate value $v_k$, the remaining $Q = 31$ bits may be denoted as $q31(v_k)$, which may include the mantissa and exponent of the original floating-point value $v_k$. In other words, $q31(v_k)$ may represent

$v_k$ without its sign bit. The mantissa information represents the significant digits of the floating point number. The exponent information indicates the power of the base (e.g., 2 in binary) by which the mantissa information should be multiplied. Although 32-bit floating-point values are used as an example, it should be noted that any floating-point or integer encoding with a desired bit length may be configured, such as float16 (i.e., 16-bit floating-point), cfloat16 (i.e., configurable float16), bfloat16 (i.e., brain float16), 8-bit floating-point, 8-bit integer, 4-bit integer, etc.

(d) Trimmable packet

At 350-360 in FIG. 3, first worker node 111 may generate and forward a trimmable packet that includes (a) header information (H) and (b) payload information that includes a first payload portion (P1) and a second payload portion (P2) that are generated based on $V = \{v_k\}$. In the example in FIG. 4, FLAG = 1 in header information 421 indicates that packet 420 is trimmable. First payload portion 422 may include $K \times P$-bit representations (e.g., $P = 1$) of respective $K$ gradient coordinate values $\{v_k\}$. Second payload portion 423 may include $K \times Q$-bit representations (e.g., Q = 31) of respective $K$ gradient coordinate values $\{v_k\}$. Note that first payload portion 422 requires fewer bits to represent $\{v_k\}$ compared to second payload portion 423.

Examples of the present disclosure may be implemented to generate "trimmable gradients" by fitting compressed gradients at the front of the packet (i.e., first payload portion immediately after header information). If $K$ gradient coordinate values are packed in trimmable packet 420, the first $K \times P$ payload bits may include compressed coordinate values, while the remainder $K \times Q$ payload bits include additional information to recover the original $\{v_k\}$. In response to determination that congestion control is required, the size of trimmable packet 420 may be trimmed by approximately $\dfrac{Q}{P+Q}$ .

Consider an example using $P = 1$ and $Q = 31$. An example trimmable packet with a maximum transmission unit (MTU) of 1500 bytes may accommodate about $K = 365$ gradient coordinate values. Using $P = 1$, the trimmed packet may include 45 bytes of compressed payload (i.e., first payload portion). Accounting for 42 bytes of header information, 87 bytes of payload information (i.e., second payload portion) may be trimmed to achieve a compression ratio of 94.2%. This allows network device 160/102 to control congestion and reduce the likelihood of packet loss. Any suitable ($P$, Q) may be configured. In practice, any suitable $P > 0$ and $Q > 0$ may be configured, such as $P > Q$ (e.g., $P = 17$, $Q = 15$), $P < Q$ (e.g., $P = 0.5$, $Q = 31.5$) or $P = Q$ (e.g., $P = 16$, $Q = 16$), etc. Note that $P + Q$ may have any suitable bit length (not necessarily 32 in the case of 32-bit floating-point format).

If trimming occurs, the destination may obtain a mix of full-precision gradient coordinate values (i.e., both $P$-bits and $Q$-bits received) and lower-precision gradient coordinate values (i.e., P-bit only). For a gradient coordinate value for which only its $P$-bit is received, scaling may be performed to better fit their original size. To inform the destination of the size of the original $v_k$, the encoding may include a standard deviation of the gradient coordinate values. The standard deviation may be sent in a dedicated small packet (not shown in FIG. 4 for simplicity) to ensure that it is not trimmed, or estimated by the receiver using other received values. Intuitively, the standard deviation may provide a good estimate of the coordinate's magnitude given that the identity of trimmed packets is unknown ahead of time.

(e) Selective packet trimming by network device

At 390 in FIG. 3, network device 160/102 may perform congestion monitoring (e.g., periodically) to determine whether congestion control is required. For example, block 390 may involve monitoring packet queue(s) or buffer(s) on network device 160/102 where packets are temporarily stored before being transmitted. By tracking the length and/or wait times of the queue(s), congestion control may be required when queue buildup is detected, such as when exceeding predetermined threshold(s). In practice, a buildup in shallow buffers/queues may lead to packet delays and losses.

In the example in FIG. 4, packet trimming may occur at PNIC 160. At 391 in FIG. 3, PNIC 160 may receive trimmable packet 420 via interface 161 (e.g., physical port). At 392-394, in response to determination that congestion control is required, packet trimmer 162 on PNIC 160 may identify that packet 420 is trimmable based on FLAG = 1 in header 421. Next, PNIC 160 may perform packet trimming (see 430) to generate trimmed packet 440 by removing second payload portion 423 before forwarding trimmed packet 440 towards destination = second worker node 112. Note that trimmable packet 420 and trimmed packet 440 are denoted as PKT1 = (H, P1, P2) and PKT2 = (H, P1) in FIG. 3. Otherwise, if congestion control is not required or the received packet is not trimmable, block 395 may be performed to forward the original PKT1 = (H, P1, P2) 420 towards the destination.

(f) Decoding at destination

At second worker node 112, decoder 401 may perform decoding to recover a lower-precision version of original model information 410 based on trimmed packet 440. For example, recovered model information 450 may include a set of $h(v_k) = sign(v_k)$ for $k = 0, ..., K - 1$. Using a decentralized approach for gradient synchronization, recovered model information 450 may be aggregated with other model information, thereby generating aggregated model information that may be distributed to other worker node(s). Once all model information is aggregated, each worker node may update model parameters associated with its model, thereby maintaining consistency among all worker nodes 111-11*N*.

In practice, decoder 401 may decode the quantized sign bits [-1,+1] by scaling them, such as by multiplying a standard deviation of the original $\{v_k\}$ (discussed earlier using blocks 340-342). In the example in FIG. 4, the scaling process at the destination may include calculating $\widehat{v_k} = f \cdot sign(v_k)$ using any suitable scaling factor *f* that is sent from first worker node 111 to second worker node 112, estimated by second node 112, etc. In some cases, it has been observed that the simple scalar quantization approach might affect training convergence and decoding accuracy. To improve on this, an alternative encoding process may be implemented in FIG. 5.

Second example: exploiting random rotations

Blocks 370-380 in FIG. 3 will be described using FIG. 5, which is a schematic diagram illustrating second example 500 of congestion control using trimmable packets in distributed training environment 100. Similar to FIG. 4, trimmable payload information will be exemplified using trimmable packets (i.e., packet format with header information) in FIG. 5. According to examples of the present disclosure, encoding and decoding may be improved based on random rotations such that different gradient coordinate values may share the impact of trimming while improving accuracy. In one example, the principles of "DRIVE" may be used, the description of which may be found in a publication entitled "DRIVE: one-bit distributed mean estimation" by Shay Vargaftik, Ran Ben Basat, Amit Portnoy, Gal Mendelson, Yaniv Ben-Itzhak, and Michael Mitzenmacher in the Proceedings of the 35th International Conference on Neural Information Processing Systems (NIPS '21), Article 28, 362-377 (2004). This publication is incorporated herein by reference.

In more detail, DRIVE applies a transformation in the form of Randomized Hadamard Transform (RHT) to a set of gradient coordinate values before quantization. RHT may be implemented as a fast, in-place transform on GPUs. Intuitively, after RHT, the gradient coordinate values may be symmetrically centered close to zero, which results in both a smaller quantization error and a smaller worst-case error in any single coordinate value. In practice, it has been observed that applying RHT to an entire collective communication message gradient blob (e.g., 25 MB) may incur a slowdown. In this case, the RHT step may be improved or optimized by splitting up each blob into smaller rows, such as $2^{15} = 32,768$ entries such that each row is able to fit within a GPU's L1 shared memory, and independently perform RHT to each row in parallel. This not only saves GPU computation but also reduces communication latency. In the following, V may refer to a set (or row) of gradient coordinate values

denoted as $\{v_k\}$, where k∈ 0,..., *K* - 1, such as $K = 2^{15}$. In practice, any suitable *K* may be used.

(a) Encoding

At 370 in FIG. 3, first worker node 111 (e.g., trimmable packet generator 150) may generate a set of transformed coordinate values by transforming a set of gradient coordinate values $V = \{v_k\}$. As used herein, the term "transformed coordinate value" (or "transformed model information") may refer to a coordinate value that is derived from another coordinate value, such as by performing a transformation using any suitable function. See 510-511 and 520 in FIG. 5. The term "transformation" may refer generally to one or more operations (e.g., mathematical operations). Note that any suitable transformation to generate the "transformed coordinate values" may be performed, such as Hadamard transform (also known as Walsh-Hadamard transform) or any variation thereof (e.g., RHT), etc. In practice, the Hadamard transform may be implemented to apply an orthogonal, symmetric and linear transformation on the input data (e.g., gradient coordinate values). Any suitable algorithm to perform the transformation may be used, such as fast Walsh-Hadamard transform, etc.

In the example in FIG. 5, first worker node 111 may perform RHT using a pseudo-random seed s to generate transformed coordinate values in the form of rotated axis coordinate values: $R_s(V) = \{r_k\}$. Depending on the desired implementation, block 370 may include first worker node 111 calculating a scaling factor $f = \|V\|_2^2 / \|R_s(V)\|_1$ to facilitate decoding in a substantially unbiased fashion. As with the standard deviation discussed earlier using FIG. 4, the row scaling factors may be sent in small packets (not shown in FIG. 5 for simplicity) to avoid getting trimmed. In practice, it should be noted that any scaling factor may be used. In another example, instead of transmitting scaling factor(s), an appropriate scaling factor may be estimated by the destination.

At 380 in FIG. 3, based on $R_s(V) = \{r_k\}$ in a floating-point format, first worker node 111 may perform compression (e.g., stochastic quantization) to generate multiple (*M*) portions of payload information. At 381, a first payload portion (P1) may be generated to include sign information associated with $R_s(V) = \{r_k\}$. For each transformed coordinate value $r_k$, a *P*-bit quantization value denoted as $h(r_k) = sign(r_k)$ may be calculated and configured to be non-trimmable. Further, at 382, a second payload portion (P2) to include mantissa information and exponent information associated with $R_s(V) = \{r_k\}$. For each transformed coordinate value $r_k$, the remaining $Q = 31$ bits may be denoted as $q31(r_k)$, which may include the mantissa and exponent of $r_k$.

Note that in the *P* = 1 case, sending the sign bit $sign(r_k)$ as the head is beneficial since each rotated coordinate $r_k$ follows a symmetric normal distribution with zero mean. Therefore, for $r_k$ represented as a 32-bit floating-point value, each packet may be rearranged to contain the sign bits before all the remaining 32-bit tails (mantissa and exponent bits). This means for the nontrimming case, a precise encoding of the original 32-bit floating-point value may be achieved without using any additional space overhead.

In the example in FIG. 5, trimmable packet 530 may be generated to include (a) header information 531 indicating FLAG = 1 (i.e., packet = trimmable), (b) payload information that includes first payload portion 532 and second payload portion 533. First worker node 111 may forward trimmable packet 530 towards destination = second worker node 112 via PNIC 160 and network switch 102. Compared to the example in FIG. 4, congestion control is not required at PNIC 160. However, packet trimming may occur at network switch 102.

(b) Selective packet trimming

In the example in FIG. 5, network switch 102 may include interface(s) for receiving/sending packets and packet trimming model for generating trimmed packets. Network switch 102 may also be configured to perform blocks 390-395, the details of which will not be repeated here for brevity. In the example in FIG. 5, in response to determination that congestion control is required and FLAG = 1 in trimmable packet 530, network switch 102 may perform packet trimming (see 540). Trimmed packet 550 generated by network switch 102 may include header information 531 and first payload portion 532. Second payload portion 533 may be discarded. Trimmed packet 550 contains fewer bits compared to trimmable packet 530.

(c) Decoding

At second worker node 112, in response to receiving trimmed packet 550, decoder 401 may perform decoding to generate recovered model information 560. In practice, received packets may be decoded in grounds based on each row on which RHT is performed. If none of the received packets is trimmed, Inverse Randomized Hadamard Transform (IRHT) may be performed on the received rotated row to obtain the original row: $V = IRHT$ $(R_s(V)) = IRHT(\{r_k\})$, using the same pseudorandom seed $s$. For trimmed packet 550, it only contains first payload portion 532 that includes sign information: $sign(r_k) \in \{-1, +1\}$. The sign bits may be scaled using an unbiased scaling factor ($f$). An estimate of the original row may be decoded as follows: $\tilde{V} = IRHT(\{\hat{r}_k\})$, where $\widehat{r_k} = r_k$ if $r_k$ is not trimmed. Otherwise, $\widehat{r_k} = f . sign(r_k)$ when trimmed. See also 560-562 in FIG. 5.

By rethinking how worker nodes 111-11$N$ compare and send gradients according to examples of the present disclosure, intermediate network devices may selectively perform packet trimming whenever congestion is forming in their queue(s). This way, bandwidth-heavy distributed training jobs may coexist with other bursty traffic in a shared network while achieving more consistent flow completion time and reducing the likelihood of stragglers. Examples of the present disclosure should be contrasted against approaches that necessitate the implementation of gradient compression algorithms on high-speed network switches. Such implementation may be a challenging algorithmic and engineering feat. For example, running gradient compression algorithms at line rate may require building a large number of arithmetic calculation circuits into a switch's chipset. In contrast, examples of the present disclosure may leverage packet trimming capability in various network devices.

Comparisons

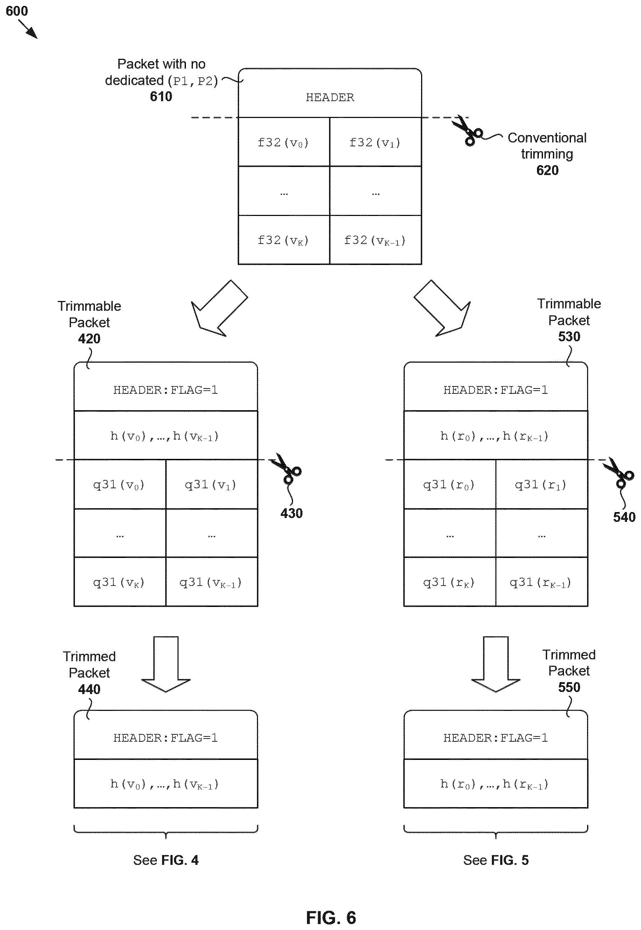

FIG. 6 is a schematic diagram illustrating comparison 600 between conventional packet 610 and trimmable packets 420, 530 according to the examples in FIGs. 4-5. In FIG. 6, conventional packet 610 may include payload information specifying a set of $K$ gradient coordinate values, such as $f32(v_o), ..., f32(v_{K-1})$ in a 32-bit floating-point format. Conventionally, a network switch capable of packet trimming may "trim" the majority of bytes in packet 610 and preserve only a short header (see 620). The network switch may then forward the short header with high priority, bypassing other payload-carrying packets, such that the destination and source are able to react to congestion at that particular network hop and reduce sending.

Examples of the present disclosure should be contrasted against conventional approaches that necessitate a sender/source to decide on the compression ratio during encoding. By encoding gradient coordinate values at a lower precision before sending them across the network, the tradeoff between the number of bits sent and the resulting model accuracy may be controlled by the sender. However, this necessitates the sender to make bandwidth decisions ahead of time to reduce the amount of traffic sent in the first place. That is, unless the sender knows about the extent of congestion at the time of transmission (e.g., based on a coarser-grained congestion control feedback loop), the sender might not be able to adjust effectively. Also, using such approaches, inflight packets are unable to react to unpredictable congestion and packet losses.

Using examples of the present disclosure, distributed training may be implemented using more network bandwidth by transmitting full-sized trimmable packets 420/530 when network paths are relatively free or uncongested. Otherwise, in response to congestion (e.g., a network device's queueing buffer fills up), packet trimming 430/540 may be performed by network device 160/105 such that smaller trimmed packets 440/550 may be forwarded instead. Since trimmable packets 420/530 are trimmed instead of dropped, retransmission is not required provided trimmed packets 440/550 are delivered to the destination.

Using examples of the present disclosure, trimmable packets may be generated to facilitate an improved split of labor: compute-efficient worker nodes *111-11N* (e.g., GPU nodes) are responsible for pre-computing gradient transformation and/or quantization, while network devices may selectively activate compression by performing packet trimming (with minimal additional computation). In practice, trimmable packets may be generated to reduce any impact on the training accuracy when encountering heavy congestion.

Example network devices

In the examples in FIGs. 4-5, PNIC 160 may be configured to receive trimmable payload information in a packet format, i.e., trimmable packets 420, 530. In another example, trimmable payload information in a non-packet format will be explained using FIG. 7A, which is a schematic diagram illustrating third example 700 of congestion control using trimmable payload information in distributed training environment 100. At 710 in FIG. 7A, based on model information 410/510, first worker node 111 (e.g., using encoder 150) may generate trimmable payload information that includes P1 711 and P2 712, but without any header information. In this case, interface 161 on PNIC 160 may be a bus that interfaces with GPU(s) associated with first worker node 111, such as peripheral component interconnect express (PCIe) bus, etc. At 720-730, in response to determination that congestion control is required, trimmer 162 may generate trimmed payload information 730 that includes P1 711, but excludes at least some of P2 712. Trimmed payload information 730 forwarded to the destination may be in a packet format (as shown in FIG. 7A) or non-packet format (not shown for simplicity).

FIG. 7B is a schematic diagram illustrating fourth example 701 of congestion control using trimmable payload information in distributed training environment 100. In this example, PNIC 160 may receive raw model information 410/510 (explained using FIGs. 4-5) that is not encoded in a trimmable format. For example, PNIC 160 may receive model information 410/510 across multiple packets (e.g., PCIe packets that are 256 bytes each) from first worker node 111. In this case, at 740, PNIC 160 may include encoder 163 to generate trimmable payload information based on model information 410/510. Trimmable payload information 740 may be generated to include P1 741 (i.e., non-trimmable) and P2 742 (i.e., trimmable). At 750, in response to determination that congestion control is required, trimmer 162 may generate trimmed payload information that includes P1 741, but excludes at least some of P2 742. This way, at 760, trimmed payload information in a packet format (as shown) or non-packet format may be forwarded towards its destination.

Depending on the desired implementation, an interconnect network switch may be configured to be a "network device" according to examples of the present disclosure. As used herein, the term "interconnect network switch" may refer generally to hardware and/or software component(s) that is configured to facilitate communication among multiple components on a computer system, among multiple GPUs within a particular worker node, or from one worker node to another worker node (e.g., 111 to 112). Two examples will be described using FIGs. 8A-B. In practice, an interconnect network switch may support any suitable number of GPUs on worker node 111/112 (i.e., not limited to eight GPUs).

FIG. 8A is a schematic diagram illustrating first example interconnect network switch 800 for congestion control using trimmable payload information in a distributed training environment. Here, first interconnect network switch 800 ("first switch") may be a component within first worker node 111 on computer system 110. First switch 800 may be configured to enable seamless, high-bandwidth communication among multiple GPUs 801-808 within first worker node 111. At 810, first switch 800 may receive trimmable payload information from a first GPU (e.g., GPU1 801) via any suitable interface (e.g., 161). At 820, in response to determination that congestion control is required, first switch 800 (e.g., using trimmer 162) may perform trimming to generate trimmed payload information 830, which includes a non-trimmable portion (P1) but excludes at least some of a trimmable portion (P2).

FIG. 8B is a schematic diagram illustrating second example interconnect network switch 840 for congestion control using trimmable payload information in a distributed training environment. In addition to intra-node communication among multiple GPUs 801-808 on first worker node 111, first switch 800 may be configured to enable inter-node communication with multiple GPUs 841-848 on second worker node 112 via second interconnect network switch 840 ("second switch"). At 850, first switch 800 may receive trimmable payload information from a first GPU (e.g., GPU1 801) via any suitable interface (e.g., 161). At 860, in response to determination that congestion control is required, first switch 800 (e.g., using trimmer 162) may perform trimming to generate trimmed payload information 870, which includes a non-trimmable portion (P1) but excludes at least some of a trimmable portion (P2). Next, first switch 800 may forward trimmed payload information 870 towards one or more destinations (e.g., GPU8 848) via second switch 840. In another example, first switch 800 may be configured to forward both trimmed and untrimmed payload information, such as trimmed payload information 870 to at least one destination (e.g., GPU8 848), and untrimmed payload information to at least one other destination (not shown for simplicity).

In the examples in FIGs. 7A-B, it should be noted that trimming may be performed by network switch 102 in physical network 101 instead of PNIC 160. Similarly, in FIGs. 8A-B, trimming may occur at second switch 840 instead of first switch 800. Other implementation details described using FIGs. 1-6 are also applicable to the examples in FIGs. 8A-B, and not repeated here for brevity.

Additional implementation details

(a) Multi-level trimming

In the examples in FIGs. 1-8B, a two-tier encoding approach has been explained using P = 1 bit as the trimming level. Depending on the desired implementation, network device 160/102/810 may be configured to perform multiple trimming actions for different congestion levels. Such capability introduces two exciting challenges. First, one needs to design an accurate encoding that would allow a network device to choose a trimming level. Second, this opens the door to algorithms that allow the network device to decide which packets to trim and by how much.

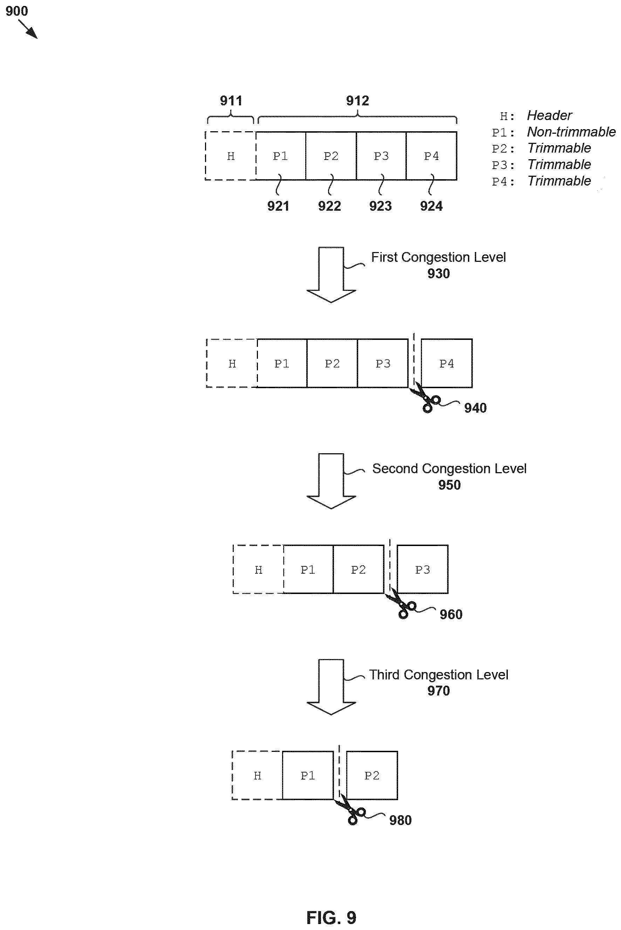

An example is shown in FIG. 9, which is a schematic diagram illustrating example multi-level payload information trimming 900 for congestion control in distributed training environment 100. In this example, trimmable packet 910 may include (a) header information 911 and (b) payload information 912 that includes $M > 2$ payload portions. Using $M = 4$ for example, the payload information 912 may include first portion 921 that is non-trimmable. Second portion (P2) 922, third portion (P3) 923 and fourth portion (P4) 924 are trimmable. Note that header information 911 may be omitted where trimmable payload information in non-packet format is used (e.g., FIGs. 7A-B and 8A-B).

At 930-940, in response to a first congestion level (e.g., buffer = 70% full), P4 924 may be discarded. At 950-960, in response to a second congestion level (e.g., buffer = 80% full) that is worse than the first congestion level, P3 923 may be discarded. At 970-980, in response to a third congestion level (e.g., buffer = 90% full) that is worse than the second congestion level, P2 922 may be discarded. In all cases, at least P1 921 may be forwarded such that lower-precision model information may be recovered. In practice, when handling bursty incoming traffic, different trimming sizes may lead to different congestion control behaviors and, therefore, different fractions of packets trimmed. Depending on the desired implementation, packets may also be dropped by a particular network device in response to a third congestion level, or a fourth congestion level (e.g., 99.99% or 100% full). Note that trimming 940, 960, 980 may be performed by different network devices (i.e., hops).

(b) Gradient compression

Although described using quantization, it should be understood that examples of the present disclosure may be implemented using any suitable compression approach. Other examples may include sparsification, low-rank decomposition, etc. Using sparsification approaches, worker nodes may decide on a subset of gradient coordinate values to communicate in a way that minimizes error for a given sparsification ratio. Using low-rank decomposition approaches, gradients of parameter matrices may be decomposed into low-rank representations.

(c) Interacting with congestion control

In practice, congestion feedback signals help senders to detect bandwidth oversubscription in their bottleneck link and adjust their sending rates accordingly. For a distributed training setup, it is possible to adjust $Q$ (or apply a different compression approach as discussed above) to change the size of trimmable packets sent based on expected congestion in the network and the desired accuracy. However, in some cases, network switches may still suffer from unpredictable congestion, caused by new flows ramping up or incast.

In this case, an additional trimming-based just-in-time compression may be applied separately even if gradients are already compressed ahead of time. This requires a gradient encoding design that supports both ahead-of-time compression and just-in-time trimming of any fraction of packets. For example, for gradient sparsification, the sender may first discard a certain ratio of gradient coordinates according to the congestion control signal and subsequently send them using RHT-based trimmable encoding. In low-rank decomposition, a certain format for laying out different ranks in the packet payload may be used, such that trimming arbitrary packets only affects the ranks with the least importance (e.g., smallest eigenvalue).

Physical implementation view

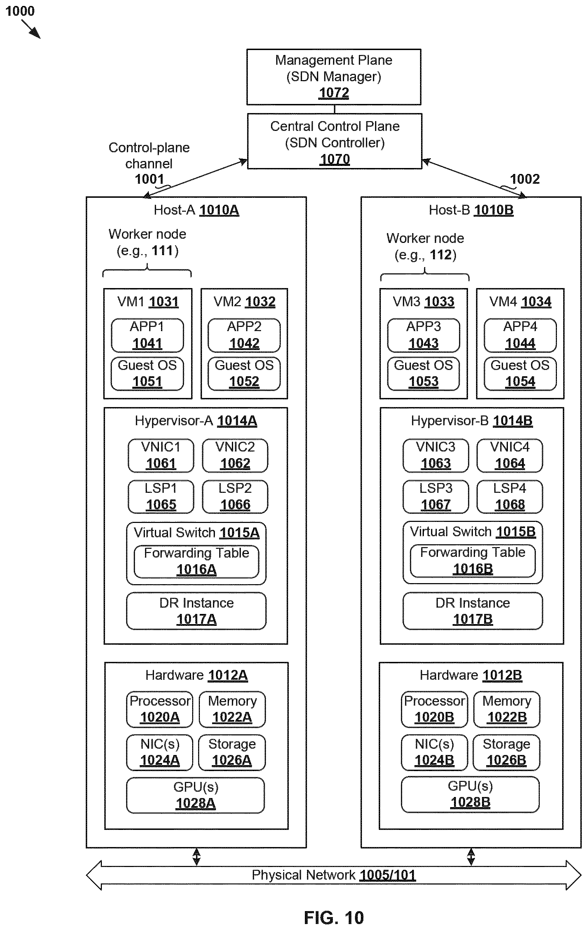

FIG. 10 is a schematic diagram illustrating example software-defined networking (SDN) environment 1000 in which worker nodes 111-11$N$ may be implemented. In this example, worker nodes 111-112 may be implemented using virtualized computing instances in the form of virtual machines (VMs), which are respectively denoted as VM1 1032 and VM3 1033. In more detail, SDN environment 1000 may include any suitable number of hosts, such as host-A 1010A and host 1010B. Host 1010A/1010B may include suitable hardware 1012A/1012B and virtualization software (e.g., hypervisor-A 1014A, hypervisor-B 1014B) to support various VMs. For example, host-A 1010A may support VM1 1031 and VM2 1032, while VM3 1033 and VM4 1034 are supported by host-B 1010B. Hardware 1012A/1012B includes suitable physical components, such as central processing unit(s) (CPU(s)) or processor(s) 1020A/1020B; memory 1022A/1022B; physical network interface controllers (PNICs) 1024A/1024B; storage disk(s) 1026A/1026B; GPUs 1028A/1028B etc.

Hypervisor 1014A/1014B maintains a mapping between underlying hardware 1012A/1012B and virtual resources allocated to respective VMs. Virtual resources are allocated to respective VMs 1031-1034 to support a guest operating system and application(s); see 1041-1044, 1051-1054. For example, the virtual resources may include virtual CPU, guest physical memory, virtual disk, virtual network interface controller (VNIC), etc. Hardware resources may be emulated using virtual machine monitors (VMMs). For example in FIG. 10, VNICs 1061-1064 are virtual network adapters for VMs 1031-1034, respectively, and are emulated by corresponding VMMs (not shown) instantiated by their respective hypervisor at respective host-A 1010A and host-B 1010B. The VMMs may be considered as part of respective VMs, or alternatively, separated from the VMs. Although one-to-one relationships are shown, one VM may be associated with multiple VNICs (each VNIC having its own network address).

Although examples of the present disclosure refer to VMs, it should be understood that a "virtual machine" running on a host is merely one example of a "virtualized computing instance" or "workload." A virtualized computing instance may represent an addressable data compute node (DCN) or isolated user space instance. In practice, any suitable technology may be used to provide isolated user space instances, not just hardware virtualization. Other virtualized computing instances may include containers (e.g., running within a VM or on top of a host operating system without the need for a hypervisor or separate operating system or implemented as an operating system level virtualization), virtual private servers, client computers, etc. Such container technology is available from, among others, Docker, Inc. The VMs may also be complete computational environments, containing virtual equivalents of the hardware and software components of a physical computing system. Depending on the desired implementation, examples of the present disclosure may also leverage any suitable serverless computing technology. One example is function-as-a-service (FaaS), which allows developers to execute code (e.g., in response to events) without having to manage the underlying cloud infrastructure. Another example is serverless GPU (also known as accelerator-as-a-service), which allows developers to access powerful GPU resources for their applications.

The term "hypervisor" may refer generally to a software layer or component that supports the execution of multiple virtualized computing instances, including system-level software in guest VMs that supports namespace containers such as Docker, etc. Hypervisors 1014A-B may each implement any suitable virtualization technology, such as VMware ESX® or ESXi™ (available from VMware LLC), Kernel-based Virtual Machine (KVM), etc. The term "packet" may refer generally to a group of bits that can be transported together, and may be in another form, such as "frame," "message," "segment," etc. The term "traffic" or "flow" may refer generally to multiple packets. The term "layer-2" may refer generally to a link layer or media access control (MAC) layer; "layer-3" a network or Internet Protocol (IP) layer; and "layer-4" a transport layer (e.g., using Transmission Control Protocol (TCP), User Datagram Protocol (UDP), etc.), in the Open System Interconnection (OSI) model, although the concepts described herein may be used with other networking models.

SDN controller 1070 and SDN manager 1072 are example network management entities in SDN environment 100. One example of an SDN controller is the NSX controller component of VMware NSX® (available from VMware LLC) that operates on a central control plane. SDN controller 1070 may be a member of a controller cluster (not shown for simplicity) that is configurable using SDN manager 1072. Network management entity 1070/1072 may be implemented using physical machine(s), VM(s), or both. To send or receive control information, a local control plane (LCP) agent (not shown) on host 1010A/1010B may interact with SDN controller 1070 via control-plane channel 1001/1002.

Through virtualization of networking services in SDN environment 100, logical networks (also referred to as overlay networks or logical overlay networks) may be provisioned, changed, stored, deleted and restored programmatically without having to reconfigure the underlying physical hardware architecture. Hypervisor 1014A/1014B implements virtual switch 1015A/1015B and logical distributed router (DR) instance 1017A/1017B to handle egress packets from, and ingress packets to, VMs 1031-1034. In SDN environment 100, logical switches and logical DRs may be implemented in a distributed manner and can span multiple hosts.

For example, a logical switch (LS) may be deployed to provide logical layer-10 connectivity (i.e., an overlay network) to VMs 1031-1034. A logical switch may be implemented collectively by virtual switches 1015A-B and represented internally using forwarding tables 1016A-B at respective virtual switches 1015A-B. Forwarding tables 1016A-B may each include entries that collectively implement the respective logical switches. Further, logical DRs that provide logical layer-3 connectivity may be implemented collectively by DR instances 1017A-B and represented internally using routing tables (not shown) at respective DR instances 1017A-B. Each routing table may include entries that collectively implement the respective logical DRs.

Packets may be received from, or sent to, each VM via an associated logical port. For example, logical switch ports 1065-1068 (labelled "LSP1" to "LSP4") are associated with respective VMs 1031-1034. Here, the term "logical port" or "logical switch port" may refer generally to a port on a logical switch to which a virtualized computing instance is connected. A "logical switch" may refer generally to a software-defined networking (SDN) construct that is collectively implemented by virtual switches 1015A-B, whereas a "virtual switch" may refer generally to a software switch or software implementation of a physical switch. In practice, there is usually a one-to-one mapping between a logical port on a logical switch and a virtual port on virtual switch 1015A/1015B. However, the mapping may change in some scenarios, such as when the logical port is mapped to a different virtual port on a different virtual switch after migration of the corresponding virtualized computing instance (e.g., when the source host and destination host do not have a distributed virtual switch spanning them).

A logical overlay network may be formed using any suitable tunneling protocol, such as Virtual eXtensible Local Area Network (VXLAN), Stateless Transport Tunneling (STT), Generic Network Virtualization Encapsulation (GENEVE), Generic Routing Encapsulation (GRE), etc. For example, VXLAN is a layer-2 overlay scheme on a layer-3 network that uses tunnel encapsulation to extend layer-2 segments across multiple hosts which may reside on different physical networks. Hypervisor 1014A/1014B may implement virtual tunnel endpoint (VTEP) 1019A/1019B to encapsulate and decapsulate packets with an outer header (also known as a tunnel header) identifying the relevant logical overlay network (e.g., VNI). Hosts 1010A-B may maintain data-plane connectivity with each other via physical network 1005 to facilitate east-west communication among VMs 1031-1034.

Computer system

The above examples may be implemented by hardware (including hardware logic circuitry), software or firmware or a combination thereof. The above examples may be implemented by any suitable computing device, computer system, etc. The computer system may include processor(s), memory unit(s) and physical NIC(s) that may communicate with each other via a communication bus, etc. The computer system may include a non-transitory computer-readable medium having stored thereon instructions or program code that, when executed by the processor, cause the processor to perform processes described herein with reference to the drawings.

The techniques introduced may be implemented in special-purpose hardwired circuitry, in software and/or firmware in conjunction with programmable circuitry, or any combination thereof. Special-purpose hardwired circuitry may be in the form of, for example, one or more application-specific integrated circuits (ASICs), programmable logic devices (PLDs), fieldprogrammable gate arrays (FPGAs), etc. The term 'processor' is to be interpreted broadly to include a processing unit, ASIC, logic unit, or programmable gate array etc. The term "accelerator" may refer generally to any hardware or other computation processing unit (e.g., high-performance computation processing unit, etc.) for accelerating computational tasks, such as GPUs, TPUs, neural processing units (NPUs), etc. Any alternative processor architecture(s) may be used, such as a hybrid architecture (e.g., XPU) that is designed to handle a variety of workloads by combining different types of processing units, etc.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or any combination thereof.

Those skilled in the art will recognize that some aspects of the embodiments disclosed herein, in whole or in part, may be equivalently implemented in integrated circuits, as one or more computer programs running on one or more computers (e.g., as one or more programs running on one or more computing systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure.

Software and/or to implement the techniques introduced here may be stored on a non-transitory computer-readable storage medium and may be executed by one or more generalpurpose or special-purpose programmable microprocessors. A "computer-readable storage medium", as the term is used herein, includes any mechanism that provides (i.e., stores and/or transmits) information in a form accessible by a machine (e.g., a computer, network device, personal digital assistant (PDA), mobile device, manufacturing tool, any device with a set of one or more processors, etc.). A computer-readable storage medium may include recordable/non recordable media (e.g., read-only memory (ROM), random access memory (RAM), magnetic disk or optical storage media, flash memory devices, etc.).

The drawings are only illustrations of an example, wherein the units or procedure shown in the drawings are not necessarily essential for implementing the present disclosure. Those skilled in the art will understand that the units in the device in the examples may be arranged in the device in the examples as described or may be alternatively located in one or more devices different from that in the examples. The units in the examples described may be combined into one module or further divided into a plurality of sub-units.

The invention further provides the following embodiments:

    1. A computer system in a distributed training environment that includes multiple worker nodes, wherein the computer system comprises:

        a processor; and
        a non-transitory computer-readable medium having stored thereon instructions that, when executed by the processor, cause the processor to perform the following:

obtain model information associated with a model that is being trained by the multiple worker nodes, wherein a first worker node from the multiple worker nodes is supported by the computer system;

based on the model information, generate a first payload portion that is non-trimmable, and a second payload portion that is trimmable;

generate trimmable payload information that includes the first payload portion and the second payload portion; and

forward the trimmable payload information towards a destination to cause an intermediate network device connecting the computer system with the destination to, in response to determination that congestion control is required, generate and forward trimmed payload information towards the destination,

wherein the trimmed payload information includes the first payload portion but excludes at least some of the second payload portion.

2. The computer system of embodiment 1, wherein the instructions for obtaining the model information cause the processor to:
obtain the model information that includes a set of gradient coordinate values associated with the model.

3. The computer system of embodiment 2, wherein the instructions for generating the first payload portion and the second payload portion cause the processor to:
generate the first payload portion and the second payload portion such that the first payload portion requires a first bit length and the second payload portion requires a second bit length to represent the set of gradient coordinate values.

4. The computer system of embodiment 2, wherein the instructions for generating the first payload portion and the second payload portion cause the processor to:

generate the first payload portion to include sign information associated with the set of gradient coordinate values in a floating-point format; and generate the second payload portion to include mantissa information and exponent information associated with the set of gradient coordinate values in the floating-point format.

5. The computer system of embodiment 2, wherein the instructions for generating the first payload portion and the second payload portion cause the processor to:

generate a set of transformed coordinate values in a floating-point format based on the set of gradient coordinate values;

generate the first payload portion to include sign information associated with the set of transformed coordinate values; and

generate the second payload portion to include mantissa information and exponent information associated with the set of transformed coordinate values.

6. The computer system of embodiment 5, wherein the instructions for generating the first payload portion and the second payload portion cause the processor to:
perform a transformation based on Hadamard Transform to generate the set of transformed coordinate values.

7. The computer system of embodiment 1, wherein the instructions for forwarding the trimmable payload information towards the destination cause the processor to:
forward the trimmable payload information via the intermediate network device that is capable of performing trimming, wherein the intermediate network device is one of the following: physical network interface controller (NIC) on the computer system, interconnect network switch on the computer system, network switch, network router and gateway.

8. A method for a computer system to facilitate congestion control using trimmable payload information in a distributed model training environment that includes multiple worker nodes, comprising:

obtaining, by the computer system, model information associated with a model that is being trained by the multiple worker nodes, wherein a first worker node from the multiple worker nodes is supported by the computer system;

generating, by the computer system, a first payload portion that is non-trimmable, and a second payload portion that is trimmable based on the model information;

generating, by the computer system, trimmable payload information that includes the first payload portion and the second payload portion; and

forwarding, by the computer system, the trimmable payload information towards a destination to cause an intermediate network device connecting the first worker node with the destination to, in response to determination that congestion control is required, generating and forwarding trimmed payload information towards the destination,

wherein the trimmed payload information includes the first payload portion but excludes at least some of the second payload portion.

9. The method of embodiment 8, wherein the instructions for obtaining the model information comprises: obtaining, by the computer system, the model information that includes a set of gradient coordinate values associated with the model.

10. The method of embodiment 9, wherein generating the first payload portion and the second payload portion comprises:
generating, by the computer system, the first payload portion and the second payload portion such that the first payload portion requires a first bit length to represent the set of gradient coordinate values compared to a second bit length of the second payload portion to represent the same gradient coordinate values.

11. The method of embodiment 9, wherein generating the first payload portion and the second payload portion comprises:

generating, by the computer system, the first payload portion to include sign information associated with the set of gradient coordinate values in a floating-point format; and
generating, by the computer system, the second payload portion to include mantissa information and exponent information associated with the set of gradient coordinate values in the floating-point format.

12. The method of embodiment 9, wherein generating the first payload portion and the second payload portion comprises:

generating, by the computer system, a set of transformed coordinate values in a floating-point format based on the set of gradient coordinate values;
generating, by the computer system, the first payload portion to include sign information associated with the set of transformed coordinate values; and
generating, by the computer system, the second payload portion to include mantissa information and exponent information associated with the set of transformed coordinate values.

13. The method of embodiment 12, wherein generating the first payload portion and the second payload portion comprises:
performing, by the computer system, a transformation based on Hadamard Transform to generate the set of transformed coordinate values.

14. The method of embodiment 8, wherein forwarding the trimmable payload information towards the destination comprises:
forwarding, by the computer system, the trimmable payload information via the intermediate network device that is capable of performing trimming, wherein the intermediate network device is one of the following: physical network interface controller (NIC) on the computer system, interconnect network switch on the computer system, network switch, network router and gateway.

15. A network device in a distributed training environment that includes multiple worker nodes capable of training a model, comprising:

an interface to receive, from one of the multiple worker nodes, (a) model information associated with the model or (b) trimmable payload information that is generated based on the model information and includes a first payload portion and a second payload portion; and
a trimmer to, in response to determination that congestion control is required,

based on the model information or the trimmable payload information, generate trimmed payload information that includes the first payload portion that is non-trimmable, but excludes at least some of the second payload portion that is trimmable; and
forward the trimmed payload information towards a destination.

16. The network device of embodiment 15, further comprising an encoder to:
in response to receiving the model information via the interface, perform encoding to generate the trimmable payload information that includes the first payload portion and the second payload portion.

17. The network device of embodiment 15, wherein the trimmer is to generate the trimmed payload information by performing the following:

generate the trimmed payload information to include the first payload portion in the form of sign information associated with the model information, wherein the model information includes a set of gradient coordinate values in a floating-point format; and
generate the trimmed payload information to exclude at least some of the second payload portion in the form of mantissa information and exponent information associated with the set of gradient coordinate values.

18. The network device of embodiment 15, wherein the trimmer is to generate the trimmed payload information by performing the following:

generate the trimmed payload information to include the first payload portion in the form of sign information associated with a set of transformed coordinate values associated with the model, wherein the set of transformed coordinate values is in a floating-point format and generated based on a set of gradient coordinate values associated with the model; and generate the trimmed payload information to include the second payload portion in the form of mantissa information and exponent information associated with the set of transformed coordinate values.

19. The network device of embodiment 15, wherein the network device is a physical network interface controller (NIC) on a computer system supporting one of the multiple worker nodes, or an interconnect network switch on the computer system, wherein the interconnect network switch is configured to forward the trimmed payload information from a first component to a second component of the computer system, within a particular worker node, or from one worker node to another worker node.

20. The network device of embodiment 15, wherein the network device is one of the following: network switch, network router and gateway.

## Claims

1. A method for a computer system to facilitate congestion control using trimmable payload information in a distributed model training environment that includes multiple worker nodes, comprising:

obtaining, by the computer system, model information associated with a model that is being trained by the multiple worker nodes, wherein a first worker node from the multiple worker nodes is supported by the computer system; generating, by the computer system, a first payload portion that is non-trimmable, and a second payload portion that is trimmable based on the model information; generating, by the computer system, trimmable payload information that includes the first payload portion and the second payload portion;

and forwarding, by the computer system, the trimmable payload information towards a destination to cause an intermediate network device connecting the first worker node with the destination to, in response to determination that congestion control is required, generating and forwarding trimmed payload information towards the destination, wherein the trimmed payload information includes the first payload portion but excludes at least some of the second payload portion.

2. The method of claim 1, wherein the instructions for obtaining the model information comprises: obtaining, by the computer system, the model information that includes a set of gradient coordinate values associated with the model.

3. The method of claim 2, wherein generating the first payload portion and the second payload portion comprises: generating, by the computer system, the first payload portion and the second payload portion such that the first payload portion requires a first bit length to represent the set of gradient coordinate values compared to a second bit length of the second payload portion to represent the same gradient coordinate values.

4. The method of claim 2 or claim 3, wherein generating the first payload portion and the second payload portion comprises:

generating, by the computer system, the first payload portion to include sign information associated with the set of gradient coordinate values in a floating-point format; and generating, by the computer system, the second payload portion to include mantissa information and exponent information associated with the set of gradient coordinate values in the floating-point format.

5. The method of any of claims 2 to 4, wherein generating the first payload portion and the second payload portion comprises:

generating, by the computer system, a set of transformed coordinate values in a floating-point format based on the set of gradient coordinate values; generating, by the computer system, the first payload portion to include sign information associated with the set of transformed coordinate values; and generating, by the computer system, the second payload portion to include mantissa information and exponent information associated with the set of transformed coordinate values.

6. The method of claim 5, wherein generating the first payload portion and the second payload portion comprises:
performing, by the computer system, a transformation based on Hadamard Transform to generate the set of transformed coordinate values.

7. The method of any of the preceding claims, wherein forwarding the trimmable payload information towards the destination comprises:
forwarding, by the computer system, the trimmable payload information via the intermediate network device that is capable of performing trimming, wherein the intermediate network device is one of the following: physical network interface controller (NIC) on the computer system, interconnect network switch on the computer system, network switch, network router and gateway.

8. A computer system in a distributed training environment that includes multiple worker nodes, wherein the computer system comprises:

a processor; and
a non-transitory computer-readable medium having stored thereon instructions that, when executed by the processor, cause the processor to perform the method of any of claims 1 to 7.

9. A network device in a distributed training environment that includes multiple worker nodes capable of training a model, comprising:

an interface to receive, from one of the multiple worker nodes, (a) model information associated with the model or (b) trimmable payload information that is generated based on the model information and includes a first payload portion and a second payload portion; and
a trimmer to, in response to determination that congestion control is required,

based on the model information or the trimmable payload information, generate trimmed payload information that includes the first payload portion that is non-trimmable, but excludes at least some of the second payload portion that is trimmable; and
forward the trimmed payload information towards a destination.

10. The network device of claim 9, further comprising an encoder to:
in response to receiving the model information via the interface, perform encoding to generate the trimmable payload information that includes the first payload portion and the second payload portion.

11. The network device of claim 9 or claim 10, wherein the trimmer is to generate the trimmed payload information by performing the following:

generate the trimmed payload information to include the first payload portion in the form of sign information associated with the model information, wherein the model information includes a set of gradient coordinate values in a floating-point format; and
generate the trimmed payload information to exclude at least some of the second payload portion in the form of mantissa information and exponent information associated with the set of gradient coordinate values.

12. The network device of any of claims 9 to 11, wherein the trimmer is to generate the trimmed payload information by performing the following:

generate the trimmed payload information to include the first payload portion in the form of sign information associated with a set of transformed coordinate values associated with the model, wherein the set of transformed coordinate values is in a floating-point format and generated based on a set of gradient coordinate values associated with the model; and
generate the trimmed payload information to include the second payload portion in the form of mantissa information and exponent information associated with the set of transformed coordinate values.

13. The network device of any of claims 9 to 12, wherein the network device is a physical network interface controller (NIC) on a computer system supporting one of the multiple worker nodes, or an interconnect network switch on the computer system, wherein the interconnect network switch is configured to forward the trimmed payload information from a first component to a second component of the computer system, within a particular worker node, or from one worker node to another worker node.

14. The network device of any of claims 9 to 13, wherein the network device is one of the following: network switch, network router and gateway.

**100**

Computer System **110**

First Worker Node **111**

Model Trainer **140**

AI Model **121**

$L_0$ → $L_1$ → ... → ...

$w_0$ → $w_1$ → ... → ...

Dataset **131**

(1) → MODEL INFO **170**

Trimmable Payload Information Generator **150**

(3) → TRIMMABLE PAYLOAD **180**

PNIC **160***

Interface **161**

Payload Trimmer **162**

| H | P1 | P2 |

(4) Trimmed Payload Information **195**

| H | P1 |

(2)

H : *Header*
P1 : *Non-trimmable*
P2 : *Trimmable*

| P1 | P2 |

*OR*

| H | P1 | P2 |

**181 182 183**

✂ **190** (4)

**101**

⇄ **102***

*Intermediate Network Device*

| H | P1 |

Second Worker Node **112**

AI Model **122**

$L_0$ → $L_1$ → ... → ...

$w_0$ → $w_1$ → ... → ...

...

$N^{th}$ Worker Node **11N**

AI Model **12N**

$L_0$ → $L_1$ → ... → ...

$w_0$ → $w_1$ → ... → ...

Dataset **132**

Dataset **13N**

**FIG. 1**

200

Computer System
(e.g., **110**)

Intermediate Network
Device (e.g., **160/102/800**)

**210**
Obtain model information (MODEL INFO)
associated with model being trained by
multiple worker nodes {NODE-i},
where i=1,…,N

**220**
Based on MODEL INFO, generate
(a) first payload portion (P1) that is non-
trimmable and (b) second payload
portion (P2) that is trimmable

**221**
Generate (P1,P2) based on
gradient coordinate values
(See **340** in **FIG. 3** & **FIG. 4**)

**222**
Generate (P1,P2) based on
transformed coordinate values
(See **370-380** in **FIG. 3** & **FIG. 5**)

**230**
Generate trimmable payload information:
(a) non-packet format: (P1,P2), or
(b) trimmable packet: PKT1=(H,P1,P2)

**240**
Forward (P1,P2) or PKT1 towards DST
via intermediate network device
capable of packet trimming

| H | P1 | P2 |

**250**
Receive MODEL INFO or (P1,P2) or
PKT1=(H,P1,P2) from (NODE-i),
where i∈1,…,N

**260**
Congestion control
required?

N

**265**
Forward
(P1,P2)
or PKT1
towards DST

Y

*OR*

**270**
Trimmable
packet?

N

Y

**280**
Generate trimmed payload information
that includes P1 but excludes P2

| P1 | | P2 |

**290**
Forward trimmed payload information
(P1) or trimmed packet PKT2=(H,P1)
towards DST

**FIG. 2**

300

Computer System
(e.g., **110**)

**310** Perform configuration task(s)
to configure first worker node to
perform distributed training

**320** First worker node: Perform
training task(s) to train model using
dataset

**330** First worker node:
Obtain/generate model information
associated with model

**331** Set of $K$ gradient coordinate
values: $V=\{v_k\}$ for $k=0,\ldots,K-1$

*OR*

**370** First worker node: Generate
transformed coordinate values:
$R_s=RHT(V)=RHT(\{v_k\})=\{r_k\}$

**340** First worker node: Perform scalar
quantization based on $V=\{v_k\}$

**341** Generate $P1$ to include
sign information (P-bits): $\{h(v_k)\}$
$h(v_k)=sign(v_k)$ for $k=0,\ldots,K-1$

**342** Generate $P2$ to include
mantissa and exponent information
(Q-bits): $\{q31(v_k)\}$

**380** First worker node: Perform
quantization based on $R_s=\{r_k\}$

**381** Generate $P1$ to include
sign information (P-bits): $\{h(r_k)\}$
$h(r_k)=sign(r_k)$ for $k=0,\ldots,K-1$

**382** Generate $P2$ to include
mantissa and exponent information
(Q-bits): $\{q31(r_k)\}$

**350** First worker node: Generate
trimmable payload information:
$(P1,P2)$ or $PKT1=(H,P1,P2)$

**360** First worker node: Forward
trimmable payload information
towards $DST$

*Periodically*

Network Device
(e.g., **160/102/800**)

**390** Monitor congestion level
(e.g., queue monitoring)

**391** Receive $(P1,P2)$ or
$PKT1=(H,P1,P2)$ via interface

*Performed by
payload trimmer* **162**
*(see also example
trimming in* **FIGs. 4-9**)

*N*

**392**
Congestion control
required?

**395** Forward $(P1,P2)$ or
$PKT1$ towards $DST$

*Y*

**393**
$H:FLAG=1$?

*OR*

*N*

*Y*

**394** Generate and forward trimmed
payload information: $(P1)$ or
$PKT2=(H,P1)$

**FIG. 3**

**400**

Computer System **110**

First Worker Node **111**

Model Trainer **140**

AI Model **121**

$L_0$ → $L_1$ → ... → ...
$w_0$ → $w_1$ → ... → ...

Dataset **131**

(1) MODEL INFO **410**

Set of gradient coordinate values
$V=\{v_k\}$ for $k=0,...,K-1$ ~**411**

Trimmable Payload Information Generator (Encoder) **150**

(2) TRIMMABLE PKT **420**

```
H:FLAG=1                          421
P1:h(v_0),...,h(v_{K-1})          422
h(v_k)=sign(v_k)
P2:q31(v_0),...,q31(v_{K-1})      423
```

PNIC **160**

Interface **161**

Payload Trimmer **162**

| H | P1 | P2 |

430 (3)

(4)

Trimmed Packet **440**

| H | P1 |

**101**

~ **102**

| H | P1 |

Second Worker Node **112**

Decoder **401**

(5) MODEL INFO* **450**

*Recovered model information:
P1:{h(v_k)=sign(v_k)}
$\hat{v}_k=f*sign(v_k)$

Model trainer/aggregator **402**

AI Model **122**

**FIG. 4**

**500**

Computer System **110**

First Worker Node **111**

Model Trainer **140**

AI Model **121**

$L_0$ → $L_1$ → ... → ...

$w_0$ → $w_1$ → ... → ...

Dataset **131**

① MODEL INFO **510**

Trimmable Payload Information Generator (Encoder) **150**

③ TRIMMABLE PKT **530**

PNIC **160**

| H | P1 | P2 |

Set of gradient coordinate values

$V = \{v_k\}$ for $k = 0, \ldots, K-1$ ~ **511**

②

Set of transformed coordinate values

$R_s = RHT(V) = \{r_k\}$ ~ **520**

| H : FLAG=1 | ~ **531** |
|---|---|
| P1 : $h(r_0), \ldots, h(r_{K-1})$ <br> $h(r_k) = sign(r_k)$ | ~ **532** |
| P2 : $q31(r_0), \ldots, q31(r_{K-1})$ | ~ **533** |

**101**

**102\***

| H | P1 | P2 | ④

✂ ~ **540**

⑤

Trimmed Packet **550**

| H | P1 |

Second Worker Node **112**

Decoder **401**

⑤ MODEL INFO\* **560**

Model trainer/aggregator **402**

AI Model **122**

*\*Recovered model information*

P1 : $\{h(r_k) = sign(r_k)\}$

$\hat{v}_k = IRHT(\hat{r}_k)$ ~ **561**

$= IRHT(f*sign(r_k))$

where $\hat{r}_k = f*sign(r_k)$ ~ **562**

**FIG. 5**

**600**

Packet with no
dedicated ($P1$, $P2$)
**610**

| HEADER | |
| --- | --- |
| $f32(v_0)$ | $f32(v_1)$ |
| ... | ... |
| $f32(v_K)$ | $f32(v_{K-1})$ |

Conventional
trimming
**620**

Trimmable
Packet
**420**

| HEADER:FLAG=1 | |
| --- | --- |
| $h(v_0),...,h(v_{K-1})$ | |
| $q31(v_0)$ | $q31(v_1)$ |
| ... | ... |
| $q31(v_K)$ | $q31(v_{K-1})$ |

**430**

Trimmable
Packet
**530**

| HEADER:FLAG=1 | |
| --- | --- |
| $h(r_0),...,h(r_{K-1})$ | |
| $q31(r_0)$ | $q31(r_1)$ |
| ... | ... |
| $q31(r_K)$ | $q31(r_{K-1})$ |

**540**

Trimmed
Packet
**440**

| HEADER:FLAG=1 |
| --- |
| $h(v_0),...,h(v_{K-1})$ |

See **FIG. 4**

Trimmed
Packet
**550**

| HEADER:FLAG=1 |
| --- |
| $h(r_0),...,h(r_{K-1})$ |

See **FIG. 5**

**FIG. 6**

700

## Computer System 110

### First Worker Node 111

AI Model 121

(1)  MODEL INFO 410/510

Set of gradient coordinate values
$V=\{v_k\}$ for $k=0,\ldots,K-1$  411/511

Trimmable Payload Information
Generator (Encoder) 150

(2)

P1:$\{h(v_k)\}$ OR $\{h(r_K)\}$  711

P2:$\{q31(v_k)\}$ OR
$\{q31(r_K)\}$  712

TRIMMABLE PAYLOAD 710

### PNIC 160

Interface 161

Payload Trimmer 162

H | P1 | P2  (3)

(4)

720

Trimmed Payload 730   H | P1

To DST

**FIG. 7A**

701

## Computer System 110

### First Worker Node 111

AI Model 121

(1)  MODEL INFO 410/510

Set of gradient coordinate values
$V=\{v_k\}$ for $k=0,\ldots,K-1$  411/511

### PNIC 160

Interface 161

Encoder 163

(2)

P1:$\{h(v_k)\}$ OR $\{h(r_K)\}$  741

P2:$\{q31(v_k)\}$ OR
$\{q31(r_K)\}$  742

TRIMMABLE PAYLOAD 740

Payload Trimmer 162

H | P1 | P2  (3)

(4)

750

Trimmed Payload 760   H | P1

To DST

**FIG. 7B**

First Worker Node **111**

Trimmable Payload Information **810**

| P1 | P2 |

GPU1 **801**

GPU2 **802**

GPU3 **803**

GPU4 **804**

**161** ① Interconnect Switch (Network Device) **800**

② Payload Trimmer **162** | P1 | P2 |

**820**

GPU5 **805**

GPU6 **806**

GPU7 **807**

GPU8 **808**

③ | P1 | Trimmed Payload Information **830**

**FIG. 8A**

First Worker Node **111**

Trimmable Payload Information **850**

GPU1 **801**

GPU2 **802**

...

GPU8 **808**

| P1 | P2 |

**161** ① Interconnect Switch (Network Device) **800**

② Payload Trimmer **162** | P1 | P2 |

**860**

③ | P1 | **870**

Interconnect Switch (Network Device) **840**

④ | P1 | **870**

GPU1 **841**

GPU2 **842**

...

GPU8 **848**

Second Worker Node **112**

**FIG. 8B**

900

911 912

| H | P1 | P2 | P3 | P4 |

921 922 923 924

H: *Header*
P1: *Non-trimmable*
P2: *Trimmable*
P3: *Trimmable*
P4: *Trimmable*

First Congestion Level
930

| H | P1 | P2 | P3 | P4 |

940

Second Congestion Level
950

| H | P1 | P2 | P3 |

960

Third Congestion Level
970

| H | P1 | P2 |

980

**FIG. 9**

1000

Management Plane
(SDN Manager)
**1072**

Central Control Plane
(SDN Controller)
**1070**

Control-plane
channel
**1001**

**1002**

## Host-A **1010A**

Worker node
(e.g., **111**)

| VM1 **1031** | VM2 **1032** |
|---|---|
| APP1 **1041** | APP2 **1042** |
| Guest OS **1051** | Guest OS **1052** |

Hypervisor-A **1014A**

| VNIC1 **1061** | VNIC2 **1062** |
|---|---|
| LSP1 **1065** | LSP2 **1066** |

Virtual Switch **1015A**
Forwarding Table
**1016A**

DR Instance
**1017A**

Hardware **1012A**

| Processor **1020A** | Memory **1022A** |
|---|---|
| NIC(s) **1024A** | Storage **1026A** |

GPU(s)
**1028A**

## Host-B **1010B**

Worker node
(e.g., **112**)

| VM3 **1033** | VM4 **1034** |
|---|---|
| APP3 **1043** | APP4 **1044** |
| Guest OS **1053** | Guest OS **1054** |

Hypervisor-B **1014B**

| VNIC3 **1063** | VNIC4 **1064** |
|---|---|
| LSP3 **1067** | LSP4 **1068** |

Virtual Switch **1015B**
Forwarding Table
**1016B**

DR Instance
**1017B**

Hardware **1012B**

| Processor **1020B** | Memory **1022B** |
|---|---|
| NIC(s) **1024B** | Storage **1026B** |

GPU(s)
**1028B**

Physical Network **1005/101**

**FIG. 10**

| | Europäisches Patentamt European Patent Office Office européen des brevets | **EUROPEAN SEARCH REPORT** | **Application Number** EP 25 19 9889 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MINGHAO LI ET AL: "THC: Accelerating Distributed Deep Learning Using Tensor Homomorphic Compression", ARXIV.ORG, CORNELL UNIVERSITY LIBRARY, 201 OLIN LIBRARY CORNELL UNIVERSITY ITHACA, NY 14853, 16 February 2023 (2023-02-16), XP091441782, * Section 3 THC Overview; page 3 - page 4 * * Section 4 Tensor Homomorfic Compression; page 4 - page 6 * * Section 5 Optimizing THC; page 6 - page 8 * * Section 6 THC Parameter Server (PS); page 8 - page 9 * ----- | 1-14 | INV. H04L47/12 H04L47/10 H04L47/265 H04L47/31 H04L47/32 H04L47/33 |
| Y | ALBALAWI ABDULAZAZ ET AL: "Enhancing End-to-End Transport with Packet Trimming", GLOBECOM 2020 - 2020 IEEE GLOBAL COMMUNICATIONS CONFERENCE, IEEE, 7 December 2020 (2020-12-07), pages 1-7, XP033882780, DOI: 10.1109/GLOBECOM42002.2020.9322506 [retrieved on 2021-01-13] * abstract * * Section III.Design of the QUCO Algorithm * ----- -/-- | 1-14 | TECHNICAL FIELDS SEARCHED (IPC) H04L |

The present search report has been drawn up for all claims

| Place of search | Date of completion of the search | Examiner |
|---|---|---|
| The Hague | 7 January 2026 | Beker, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches Patentamt

European Patent Office

Office européen des brevets

## EUROPEAN SEARCH REPORT

**Application Number**

EP 25 19 9889

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZAHEER AMER ET AL: "Smart trimming of video from edge, for fine-grained adaptive multicast", 2013 IEEE 9TH INTERNATIONAL CONFERENCE ON EMERGING TECHNOLOGIES (ICET), IEEE, 9 December 2013 (2013-12-09), pages 1-6, XP032569588, DOI: 10.1109/ICET.2013.6743504 [retrieved on 2014-02-18] * Section III. Stove Architecture * ----- | 1-14 | |
| A | POPA ADRIAN ET AL: "Implementing packet trimming support in hardware", ARXIV.ORG, CORNELL UNIVERSITY LIBRARY, 201 OLIN LIBRARY CORNELL UNIVERSITY ITHACA, NY 14853, 11 July 2022 (2022-07-11), XP091268643, * Section 2. Packet Trimminmg Overview * * Section 3. Impllementing Trimming in Programmable Switches * * Section 4. Trimming Control Loop Design * ----- | 1-14 | |
| X,P | CHEN XIAOQI ET AL: "When ML Training Cuts Through Congestion: Just-in-Time Gradient Compression via Packet Trimming", PROCEEDINGS OF THE ACM SIGGRAPH/EUROGRAPHICS SYMPOSIUM ON COMPUTER ANIMATION, ACMPUB27, NEW YORK, NY, USA, 18 November 2024 (2024-11-18), pages 177-185, XP059856908, DOI: 10.1145/3696348.3696880 ISBN: 979-8-4007-1281-4 * the whole document * ----- | 1-14 | |

**TECHNICAL FIELDS SEARCHED (IPC)**

The present search report has been drawn up for all claims

| Place of search | Date of completion of the search | Examiner |
|---|---|---|
| The Hague | 7 January 2026 | Beker, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

page 2 of 2

# EP 4 716 178 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHAY VARGAFTIK** ; **RAN BEN BASAT** ; **AMIT PORTNOY** ; **GAL MENDELSON** ; **YANIV BEN-ITZHAK** ; **MICHAEL MITZENMACHER**. DRIVE: one-bit distributed mean estimation. *Proceedings of the 35th International Conference on Neural Information Processing Systems (NIPS '21)*, 2004, vol. 28, 362-377